Europäisches Patentamt

European Patent Office

Office européen des brevets

(19)

(11) **EP 0 801 879 B1**

(12) **EUROPEAN PATENT SPECIFICATION**

(45) Date of publication and mention
of the grant of the patent:
**12.06.2002   Bulletin 2002/24**

(51) Int Cl.[7]: **H05B 6/68**, H05B 6/80,
H05B 6/76, H05B 6/70

(21) Application number: **95914883.4**

(22) Date of filing: **30.03.1995**

(86) International application number:
**PCT/US95/03757**

(87) International publication number:
**WO 95/27387 (12.10.1995 Gazette 1995/43)**

(54) **VARIABLE FREQUENCY MICROWAVE HEATING APPARATUS**

MIKROWELLEN-HEIZVORRICHTUNG MIT VARIABLER FREQUENZ

FOUR DE CHAUFFAGE A ONDES ULTRA-COURTES A FREQUENCE VARIABLE

(84) Designated Contracting States:
**AT BE CH DE DK ES FR GB GR IE IT LI LU MC NL
PT SE**
Designated Extension States:
**LT SI**

(30) Priority: **31.03.1994  US 221188**

(43) Date of publication of application:
**22.10.1997   Bulletin 1997/43**

(73) Proprietor: **LOCKHEED MARTIN ENERGY
SYSTEMS, INC.
Oak Ridge, TN 37831-8243 (US)**

(72) Inventors:
 • **BIBLE, Don, W.
   Clinton, TN 37716 (US)**
 • **LAUF, Robert, J.
   Oak Ridge, TN 37830 (US)**
 • **JOHNSON, Arvid, C.
   Cary, NC 27513 (US)**
 • **THIGPEN, Larry, T.
   Angier, NC 27501 (US)**

(74) Representative: **Holmes, Miles Keeton et al
D. YOUNG & CO.,
21 New Fetter Lane
London EC4A 1DA (GB)**

(56) References cited:
**US-A- 4 196 332          US-A- 4 415 789
US-A- 4 777 336          US-A- 4 939 331
US-A- 5 241 040          US-A- 5 317 081
US-A- 5 321 222**

 • **JOURNAL OF MICROWAVE POWER, 14(1), 1979,
   MACKAY B. et al., "Frequency Agile Sources For
   Microwave Ovens", pages 70-76.**
 • **28TH MICROWAVE POWER SYMPOSIUM, July
   1993, LAUF et al., "Polymer Curing in A Variable
   Frequency Microwave Oven".**
 • **JOURNAL OF MICROWAVE POWER, 16 (3 & 4),
   1981, EL-SAYED et al., "Use of Sheath Helix
   Slow-Wave Structure as An Applicator in
   Microwave Heating Systems".**
 • **McGRAW-HILL ENCYCLOPEDIA OF SCIENCE
   AND TECHNOLOGY, Volume 18, 16th edition,
   1987, GEWARTOWSKI, "Traveling-Wave Tube",
   pages 509-511.**

## Description

This invention was made with Government support under Contract No. DE-AC05-84OR21400 awarded by the U.S. Department of Energy to Martin Marietta Energy Systems, Inc. and the Government has certain rights in this invention.

This application in part discloses and claims subject matter disclosed in earlier filed pending application Serial Number 08/306,305 filed on September 14, 1994, which discloses and claims subject matter disclosed in earlier filed pending application Serial Number 08/221,188 filed on March 31, 1994, which discloses and claims subject matter disclosed in earlier filed application Serial Number 07/792,103 filed on November 14, 1991, which issued as United States Letters Patent Number 5,321,222 on June 14, 1994, each of which disclosed subject matter inventen by at least one inventor of the present invention.

Technical Field

This invention relates to the field of microwave radiation. More specifically, this invention relates to a microwave furnace having the capability of selectively varying the frequency and power of the microwave source.

Background Art

In the field of microwave radiation, it is well known that microwave furnaces are typically constructed with a fixed operating frequency. It has long been known that the interactions of various materials with microwaves are frequency dependent. These interactions may include curing rubber and sintering ceramics. It is therefore desirable to have a microwave furnace that can be operated over a broad frequency range.

Most microwave sources have a very narrow bandwidth because they employ a resonant cavity. Microwave ovens constructed for home use are provided with a magnetron which operates at 2.45 GigaHertz (GHz), which is an efficient frequency for heating water. Due to the coupling ability of a 2.45 GHz microwave to water, these ovens are used for cooking foods, drying, and other purposes wherein the principal material to be acted upon is water. However, it is well known that frequencies in this range are not optimal in all situations, such as with heating plasmas, sintering materials such as ceramics, and preparing films such as diamond films.

The use of frequency sweeping over a wide range as a means of mode stirring has important implications for the use of microwave power to sterilize medical equipment or contaminated wastes. In such uses it is crucial to eliminate "dead" areas in the cavity wherein sufficient power may not be received in order for complete sterilization. Electronic frequency sweeping may be performed at a high rate of speed, thereby creating a much more uniform time-averaged power density throughout the furnace cavity. The desired frequency sweeping may be accomplished through the use of a variety of microwave electron devices. A helix traveling wave tube (TWT), for example, allows the sweeping to cover a broad bandwidth (e.g., 2 to 8 GHz) compared to devices such as the voltage tunable magnetron (2.45 +- 0.05 GHz). Other devices have other characteristic bandwidths as will be disclosed hereinafter.

Further, fixed-frequency microwave ovens typically found in the home are known to have cold spots and hot spots. Such phenomena are attributed to the ratio of the wavelength to the size of the microwave cavity. With a relatively low frequency microwave introduced into a small cavity, standing waves occur and thus the microwave power does not uniformly fill all of the space within the cavity, and the unaffected regions are not heated. In the extreme case, the oven cavity is becomes practically a "single-mode" cavity.

Attempts have been made at mode stirring, or randomly deflecting the microwave "beam", in order to break up the standing modes and thereby fill the cavity with the microwave radiation. One such attempt is the addition of rotating fan blades at the beam entrance of the cavity.

Another method used to overcome the adverse effects of standing waves is to intentionally create a standing wave within a single-mode cavity such that the workpiece may be placed at the location determined to have the highest power (the hot spot). Thus, only the portion of the cavity in which the standing wave is most concentrated will be used.

It has been shown that the sintering behavior of various materials improves at higher frequencies, although the exact reasons are not known. However, existing state-of-the-art technology has made difficult the task of conducting a series of identical sintering experiments in which only the frequency is changed. This is due in large part to the fact that each microwave source is connected to a different furnace cavity. It is well known that the geometry of the furnace cavity is a parameter which must be considered in such experiments.

Furnaces incorporating gyrotron oscillators to produce fixed-frequency microwaves at 28 GHz have been reported in the literature. The gyrotron furnaces are capable of sintering some materials more efficiently than those ovens provided with the 2.45 GHz magnetrons. The gyrotron furnaces have specific applications in sintering materials such as ceramics. However, 28 GHz is not an efficient frequency with which to sinter all materials. It is desired to determine the most efficient frequencies to apply to a given material in a furnace with a cavity having a selected configuration.

The frequency for most efficient processing may vary for a given material as the heating process occurs. As a material changes phases, a varied frequency may be required. Thus, it may be desired to have the capability of varying the frequency in the heating process, allowing the tester to begin heating the specimen at one frequency and then change the frequency to maintain good coupling as the temperature rises. This may also be desirable when heating composite materials, where the varying materials efficiently react at different frequencies.

Other devices have been produced to change the parameters of the heating process of selected materials. Typical of the art are those devices disclosed in the following U.S. Patents:

| Pat. No. | Inventor(s) | Issue Date |
|---|---|---|
| 3,611,135 | D.L. Margerum | Oct 5, 1971 |
| 4,144,468 | G. Mourier | Mar 13, 1979 |
| 4,196,332 | A. MacKay B, et al. | Apr 1, 1980 |
| 4,340,796 | M. Yamaguchi, et al. | Jul 20, 1982 |
| 4,415,789 | T. Nobue, et al. | Nov 15, 1983 |
| 4,504,718 | H. Okatsuka, et al. | Mar 12, 1985 |
| 4,593,167 | O.K. Nilssen | Jun 3, 1986 |
| 4,777,336 | J. Asmussen | Oct 11, 1988 |
| 4,825,028 | P.H. Smith | Apr 25, 1989 |
| 4,843,202 | P.H. Smith, et al. | Jun 27, 1989 |
| 4,866,344 | R.I. Ross, et al. | Sep 12, 1989 |
| 4,939,331 | B. Berggren, et al. | Jul 3, 1990 |

The subject matter disclosed by MacKay ('332) is further discussed in an article authored by MacKay B, et al., entitled "Frequency Agile Sources for Microwave Ovens", Journal of Microwave Power, 14(1), 1979. However, a microwave furnace having a wide frequency range has not been disclosed, except in the above-referenced co-pending application Serial Number 07/792,103.

One barrier to the use of a wide frequency range is the difficulty of achieving efficient coupling of the microwaves to a multi-mode applicator cavity, particularly when such coupling means includes a dielectric window.

Therefore, it is an object of this invention to provide a microwave heating apparatus that can be operated over a wide frequency range.

Another object of the present invention is to provide a microwave heating apparatus which may be operated over a wide frequency range wherein the microwave source may be interchanged with microwave sources having other frequency ranges.

Still another object of the present invention is to provide a microwave heating apparatus whereby two or more microwave sources may be placed into the system in parallel.

A further object of the present invention is to provide a microwave heating apparatus including a plurality of microwave sources placed in parallel, wherein the microwave sources may be selectively and alternately used.

Still another object of the present invention is to provide such a microwave heating apparatus with multiple microwave sources whereby each microwave source is controlled by a common signal generator and power supply.

Yet another object of the present invention is to provide a microwave heating apparatus whereby frequency modulation may be used as a form of mode stirring to create a more uniform power distribution in a multi-mode cavity and the loads placed therein.

Disclosure of the Invention

Other objects and advantages will be accomplished by the present invention which is designed to allow modulation of the frequency of the microwaves introduced into a furnace cavity for testing or other selected applications. Some applicable processes include heat treatment, sterilization, sintering, plasma processing, ore processing, polymerization, etching, and preparing films.

A microwave signal generator is provided for generating a low-power microwave signal for input to the microwave amplifier. The signal generator of the preferred embodiment is able to sweep a given range of frequencies, operate in pulse mode, modulate the frequency of the microwave signal, and produce various complex waveforms. The microwave signal generator of the preferred embodiment may be operated in the pulse mode using an internal pulse generator or it can be pulsed externally. An internal modulator is provided for wide band modulation. The internal modulator may operate in the AM mode or in the FM mode.

A voltage controller serves to modulate the amplitude of the microwave voltage-controlled oscillator. The microwave voltage-controlled oscillator may be used in lieu of the microwave signal generator to modify the frequency and amplitude of the generated microwave.

A first amplifier may be provided to amplify the magnitude of the signal output from the microwave signal generator or the microwave voltage-controlled oscillator. The first amplifier of the preferred embodiment is voltage-controlled, therefore the gain is adjustable such that the magnitude of the output is selectable by the operator.

A second amplifier is provided for processing the signal output by the first amplifier, or from the microwave signal generator or the microwave voltage-controlled oscillator when a first amplifier is not employed. The second amplifier outputs a high-power microwave signal to the furnace cavity and to which the workpiece is subjected. In the preferred embodiments, the second amplifier may be any one of a helix traveling-wave tube (TWT), a coupled-cavity TWT, a ring-loop TWT, a ring-bar TWT, a klystron, a twystron, or a gyrotron. These devices include an internal cooling device designed to dissipate the heat collected by the amplifier during normal operation.

In another embodiment of the invention, the oscillator and first and second amplifiers may be replaced with a frequency-agile coaxial magnetron, the frequency of which can be tuned manually, mechanically, or electrically.

A power supply is provided for the operation of the second amplifier. In the preferred embodiments, the power supply is a direct current source consisting of a precision-regulated cathode power supply and a less-regulated collector high voltage supply.

A directional coupler is provided for detecting the direction of a signal and further directing the signal depending on the detected direction. A signal received from the microwave source is directed toward the microwave cavity. A signal received from the direction of the microwave cavity is directed toward a reflected power load. The directional coupler thus provides a means whereby reflected power is diverted away from the microwave source in order to protect the microwave source from power unabsorbed by the workpiece. The directional coupler of the preferred embodiment is water-cooled for the dissipation of heat collected through the transmission of power from the microwave source and the reflection of power from the microwave cavity.

A first power meter is provided for measuring the power delivered to the microwave cavity. The first power meter is used in conjunction with a second power meter positioned to measure reflected power from the microwave cavity in order to monitor the efficiency of the microwave cavity and to insure that reflected power is dissipated in the reflected power load and not by the second amplifier.

The reflected power load may also be used to test the functionality of the system by removing all workpieces from the microwave cavity, thus directing the entire signal from the second amplifier into the reflected power load. Comparisons can be made of the power received by the reflected power load and the power delivered from the second amplifier to determine any system losses.

The magnitude of the reflected power is detected by the second power meter. This magnitude may be used to determine the efficiency of the instant frequency of the microwave introduced into the microwave cavity. A lower reflected power will indicate a more efficient operating frequency due to the higher absorption rate of the selected workpiece.

A tapered transition may be provided to enhance the efficiency with which the broadband microwave energy is coupled into the microwave cavity. By acting as an impedance transformer between the transmission line and the microwave cavity, this transition increases the percentage power coupled into the cavity. In addition, for applications in which the microwave energy must be coupled into a cavity in which reactive gases are present, this tapered transition provides a means of reducing the power density of the microwave energy at the interface between the window and reactive gases, thereby preventing formation of plasma discharges at the input window.

Brief Description of the Drawings

The above mentioned features of the invention will become more clearly understood from the following detailed description of the invention read together with the drawings in which:

Figure 1 is a schematic diagram of the preferred embodiment of the variable frequency microwave heating apparatus of the present invention;

Figure 2 illustrates a schematic diagram of another preferred embodiment of the variable frequency microwave heating apparatus of the present invention;

Figure 3 is a perspective view of the traveling wave tube, shown partially in section, which is incorporated in the variable frequency microwave heating apparatus of the present invention;

Figure 4 is a schematic diagram of a traveling wave tube which is incorporated in the variable frequency microwave heating apparatus of the present invention;

Figure 5 is an end view of the traveling wave tube, shown in cross-section, which is incorporated in the variable frequency microwave heating apparatus of the present invention;

Figure 6 illustrates a schematic diagram of another preferred embodiment of the variable frequency microwave heating apparatus of the present invention;

Figure 7 is an elevational view of a tapered waveguide applicator of the present invention showing the inlet opening thereof;

Figure 8 is an end elevational view of the tapered waveguide applicator of Figure 7 showing the outlet opening thereof;

Figure 9 is a bottom plan view, in section, of the tapered waveguide taken along **9-9** of Figure 7;

Figure 10 is an end elevational view of an alternate embodiment of a tapered waveguide applicator further including a dielectric window and showing the outlet opening thereof;

Figure 11 is a bottom plan view, in section, of the tapered waveguide of Figure 10 taken along **11-11** thereof;

Figure 12 is an end elevational view of an alternate embodiment of a tapered waveguide applicator showing the outlet opening thereof, and wherein the inner wall defines a step taper;

Figure 13 is a bottom plan view, in section, of the tapered waveguide of Figure 12 taken along **13-13** thereof;

Figure 14 is an end elevational view of an alternate embodiment of a tapered waveguide applicator showing the outlet opening thereof, wherein the inner wall defines a step taper and a dielectric window is included;

Figure 15 is a bottom plan view, in section, of the tapered waveguide of Figure 14 taken along **15-15** thereof;

Figure 16 illustrates a front elevational view of a viewport for viewing activity within the microwave cavity used in accordance with the present invention;

Figure 17 is an end elevational view, in section, of the viewport of Figure 16 taken along **17-17** thereof;

Figure 17A is an enlarged view of a portion of the viewport of Figure 17 more clearly illustrating the sealing mechanism for sealing the door of the microwave cavity used in accordance with the present invention;

Figure 18 illustrates a schematic diagram of another preferred embodiment of the variable frequency microwave heating apparatus of the present invention;

Figure 19 is a graphical illustration of the mode density versus frequency for one rectangular microwave cavity used in accordance with the present invention;

Figures 20A-D graphically illustrate power distributions in a theoretical model of a microwave cavity and a first microwave source used in accordance with several features of the present invention; and

Figures 21A-F graphically illustrate power distributions in a theoretical model of a microwave cavity a second microwave source used in accordance with several features of the present invention.

Best Mode for Carrying out the Invention

A variable frequency microwave heating apparatus incorporating various features of the present invention is illustrated generally at **10** in the figures. The microwave heating apparatus **10** is designed to allow modulation of the frequency of the microwaves introduced into a microwave cavity for testing or other selected applications. Such modulation is useful in testing procedures to determine the most efficient frequencies at which a particular material may be processed. Frequency modulation is also useful as a method of mode stirring as a means to create a more uniform power distribution in a relatively small microwave cavity.

Frequency modulation testing is useful, not only in the determination of efficient sintering frequencies of a selected material, but also in determining the most efficient sintering frequencies for the individual phases of a selected material. In the same vein, frequency modulation is useful in the processing of a material undergoing phase changes, wherein each phase of the material couples more efficiently to a frequency varied from that of other phases. Further, frequency modulation is useful when processing composite materials wherein each component couples to a different frequency than other components.

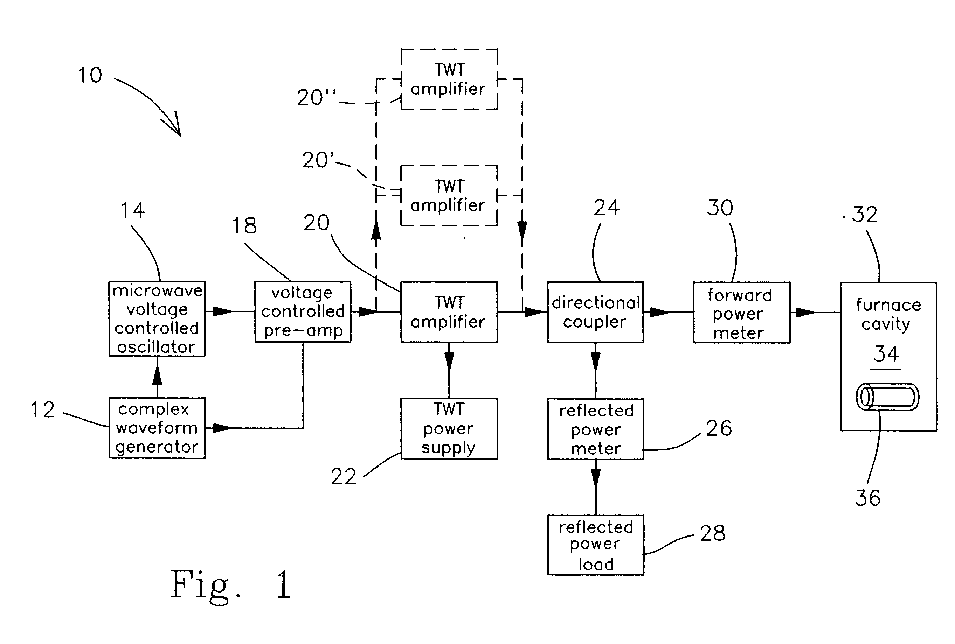

Figure 1 illustrates schematically the preferred embodiment of the variable frequency microwave heating apparatus **10** of the present invention, wherein a selected workpiece **36** is to be processed. Applicable processes include, but are not limited to, heat treatment, sterilization, sintering, plasma processing, ore processing, polymerization, etching, and preparing films. It will be understood that the term "workpiece" as used within the present disclosure refers to a selected material or composition of materials. The term "workpiece" may further include such selected material or composition of materials wherein at least one of the materials is undergoing at least one phase change and is, therefore, in more than one phase at a given time.

A microwave voltage-controlled oscillator **14** is provided for generating a low-power microwave signal for input to the microwave furnace **32**. A complex waveform generator **12** provides the controlling voltage to the voltage-controlled oscillator **14**, causing the voltage-controlled oscillator to sweep a given range of frequencies, operate in pulse mode, modulate the frequency of the microwave signal, and produce various complex waveforms.

The complex waveform generator **12** of the preferred embodiment may be operated in the pulse mode using an internal pulse generator or it can be pulsed externally. An internal modulator is provided for wide band modulation. The internal modulator may operate in the AM mode or in the FM mode.

The microwave voltage controlled oscillator **14** generates a microwave signal of a frequency determined by the voltage applied to the voltage controlled oscillator **14** by the waveform generator **12**. It may be desirable to modulate the frequency of the microwave as a selected material may efficiently couple with a particular frequency and require a high voltage level, whereas a second material may couple more efficiently at a different frequency and at a lower, or higher, voltage level. Thus, the microwave voltage-controlled oscillator **14** may be used in combination with the complex waveform generator **12** to modify the frequency of the generated microwave.

It will be seen that the number of possible combinations of frequencies and power levels is numerous. Further, with the ability of such frequency and amplitude modulation, it will be seen that the processing of a workpiece **36** may be accomplished by alternating the frequency and amplitude of the microwave in order to achieve maximum processing efficiency. The modulations may occur at such rates as to be undetectable by the workpiece **36**, yet creating maximum processing efficiency for each material and material phase.

A first amplifier **18** may be provided to amplify the power of the signal output from the microwave voltage-controlled oscillator **14**. The first amplifier **18** of the preferred embodiment is voltage-controlled, therefore the gain is adjustable such that the magnitude of the output is selectable by the operator. During operation of the variable frequency microwave heating apparatus **10**, the operator may instantaneously adjust the first amplifier **18** such that the amplitude of the microwave may be correspondingly adjusted. The control voltage for the first amplifier **18** can also be supplied by the complex waveform generator **12**, allowing the amplitude of the signal output to be modulated in any desired way.

A second amplifier **20** is provided for processing the signal output by the first amplifier **18**, or from the microwave voltage-controlled oscillator **14** when a first amplifier **18** is not employed. The second amplifier **20** outputs the microwave signal input to the multi-mode furnace cavity **34** and to which the workpiece **36** is subjected. In the preferred embodiments, the second amplifier **20** may be any one of a helix traveling-wave tube (TWT), a coupled-cavity TWT, a ring-loop TWT, a ring-bar TWT, a klystron, a twystron, or a gyrotron.

The TWT **20** is a linear beam device wherein a signal having a selected frequency and wave form is amplified and output. The TWT **20** has the capability of amplifying any selected frequency or waveform within a range or bandwidth defined by the configuration of the TWT **20**. Particularly, the physical geometry of the TWT **20** limits the frequency range, such that as a high limit is reached, a counteracting signal is encountered, giving the appearance of a second wave.

In order to achieve a frequency higher or lower than that capable of the TWT **20** incorporated in a particular configuration, the internal geometry of the TWT **20**, especially the pitch of the helix **40**, is changed. In the latter mentioned TWT **20**, a new frequency range will be defined. It will be seen, therefore, that a variety of configurations of TWT's **20** is possible such that a broader range of frequencies may be achieved. To this end, the TWT's **20** of the present invention are designed to be selectively removable from the variable frequency microwave heating apparatus **10** and interchangeable with other such TWT's **20**. Hence, a single microwave voltage-controlled oscillator **14**, microwave furnace **32**, and microwave furnace cavity **34** may be used with a variety of TWT's **20**, thus allowing a series of identical tests to be performed with the microwave frequency being substantially the only variable. One TWT **20** may define a frequency range of 4 GHz to 8 GHz, while another TWT **20'** defines a frequency range of 8 GHz to 16 GHz. Still another TWT **20"** may define a third frequency range. Interchanging TWT **20** with TWT **20'** defines a total range from 4 GHz to 16 GHz. One such TWT **20** defining a range of 4 GHz to 8 GHz is the Model T-1096 G/H Band Helix TWT manufactured by Microwave Laboratories, Inc. Specifications for the Model T-1096 are listed in Table 1.

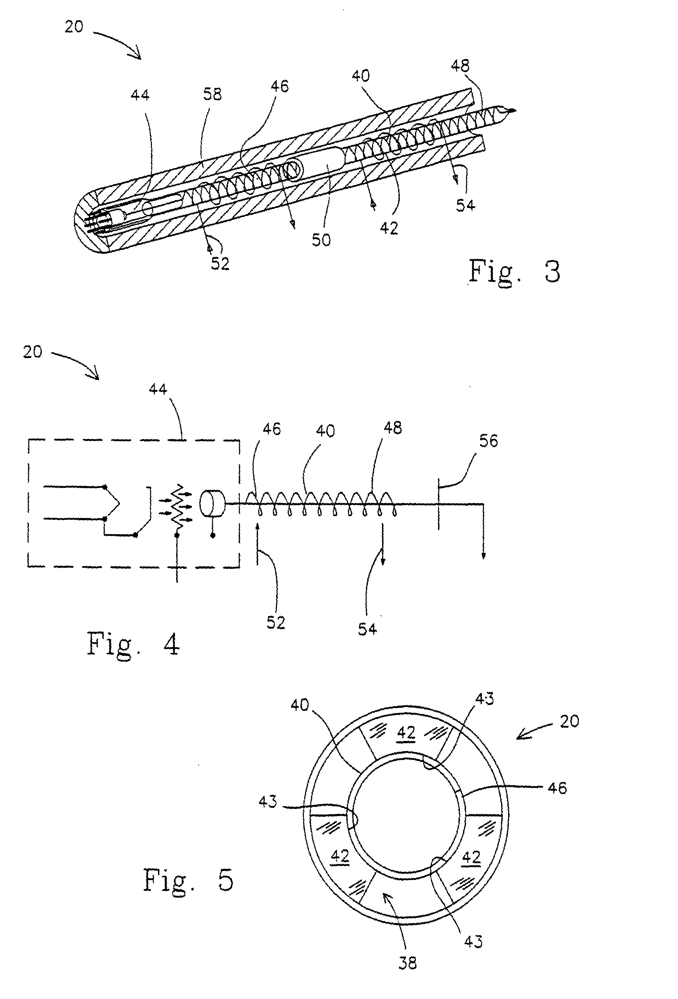

As earlier mentioned, the traveling wave tube **20** is a linear beam device characterized by a traveling electric field which continuously extracts energy longitudinally along the path of an electron beam. As shown graphically in Figure'3 and diagrammatically in Figure 4, a typical TWT **20** is constructed with an electron gun assembly **44** attached to the first end **46** of a single-wire helix **40**. The gun assembly **44** produces a focused beam of electrons which is directed through the center of the helix **40**. Tapered carbon attenuators **50**, integral to the helix **40**, serve as directional couplers preventing reflections from passing back to the tube input. Rf input and output windings **52,54** are placed at the cathode and collector ends **46,48**, respectively, of the helix **40**.

Table 1.

| Specifications for the T-1096 G/H Band Helix TWT | | | | |
| --- | --- | --- | --- | --- |
| RF Performance | Min | Max | Typ | Unit |
| Power Output | 63.0 | 65.0 | 63.5 | dbm |
| Frequency Range | 4.0 | 8.0 | | Ghz |
| Harmonic Content | - | -3.0 | -6.0 | dbc |
| Gain at rated Power | 25.0 | 37.0 | 30.0 | db |

Table 1. (continued)

| Specifications for the T-1096 G/H Band Helix TWT | | | | |
|---|---|---|---|---|
| Electrical Parameters | | | | |
| Helix Voltage | -8.0 | -9.0 | -8.4 | kV |
| Anode Voltage (WRTC) | 0.0 | +9.0 | - | kV |
| Collector Voltage (WRTC) | +6.2 | +6.8 | +6.5 | kV |
| Filament Voltage (WRTC) | 12.4 | 13.2 | 12.8 | V |
| Solenoid Voltage | 35.0 | 57.0 | 48.0 | V |
| Vac-Ion Voltage | +3.5 | +5.0 | +3.5 | kV |
| Helix Current | - | 25.0 | 15.0 | mA |
| Anode Current | - | 5.0 | - | mA |
| Collector Current | 0.9 | 1.8 | 1.2 | A |
| Filament Current | 1.2 | 2.0 | 1.4 | A |
| Solenoid Current | 21.0 | 26.0 | 25.0 | A |

A collector **56**, charged positively, is located at the second end **48** of the helix **40**. The collector **56** provides the source of energy for the operation of the TWT **20**. Beam focusing and containment magnets **58** surround the entire assembly of the TWT **20**.

Electrons traversing the axis of the helix **40** interact with the rf wave propagating along the helix **40** such that energy is transferred from the electron beam to the rf wave. This interaction is continuous and cumulative, increasing the amplitude of the rf signal as it propagates along the helix **40**.

The second amplifier **20** of the preferred embodiment includes an internal cooling device **38** designed to dissipate the heat collected by the second amplifier **20** during normal operation. Particularly, in the event of a helix TWT, the helix of the TWT **20** and the helix supports **42** are fabricated from selected materials in order to perform this function. The helix TWT **20** of the preferred embodiment is provided with a helix **40** fabricated from flat copper wire. A plurality of retainers **42** are positioned in parallel fashion about the longitudinal axis of the helix TWT **20** about which the copper wire is wrapped, the retainers **42** serving to retain the helix **40** defined by the copper wire and further to dissipate the heat transferred to the copper wire during operation of the helix TWT **20**. In the preferred embodiment the retainers **42** define a cross-section with at least one substantially flat side **43**, the flat side **43** being in substantial contact with the copper wire.

Further, the retainers **42** of the preferred embodiment are fabricated from beryllium oxide. It is known that even though beryllium oxide is an electrical insulator, it is also an excellent conductor of heat. The copper wire defining a flat cross-section and substantially contacting the flat side **43** of the retainers **42** provides for an efficient and thorough dissipation of the heat transferred to the copper wire, thus providing a cooling means **38** for the internal portion of the helix TWT **20** and hence extending the life of the helix TWT **20**.

A power supply **22** is provided for the operation of the second amplifier **20**. Though not individually depicted in the figures, the preferred power supply **22** is a direct current source consisting of a precision-regulated cathode power supply and a less-regulated collector high voltage supply. Output regulation for the cathode supply is accomplished through a tube regulator circuit using a tetrode tube. One such tube is the Eimac 4PR400A tube. Regulation for the collector supply and the cathode raw supply is accomplished with an electromechanical regulator. The collector supply of the preferred embodiment is provided with two switch plates for the selection of output ranges. A typical power supply **22** used to power the second amplifier **20** is the Universal Voltronics Model BRE-15-140-ML High Voltage Power Supply. The specifications of the Universal Voltronics power supply are listed in Table 2.

Table 2.

| Electrical Specifications for the Universal Voltronics Model BRE-15-140-ML Power Supply | |
|---|---|
| HELIX SUPPLY | |
| Output Voltage | 500V - 15KVDC |
| Output Current | 140 mADC |
| Polarity | Negative Output |
| Ripple | .01% rms @ 15KVDC, 14OmADC |
| Regulation, load | +0.1% from no load to full load @ maximum output |
| Regulation, line | +0.1% for line voltage from 190-230 VAC @ maximum |

Table 2.   (continued)

| Electrical Specifications for the Universal Voltronics Model BRE-15-140-ML Power Supply | |
| --- | --- |
| HELIX SUPPLY | |
| output | |
| COLLECTOR SUPPLY | |
| Output Voltage and Current | |
| Mode I (parallel) | 0-5KV @ 4000mA |
| Mode II (series) | 0-10KV @ 2000mA |
| Polarity | Positive output, negative tied to helix supply |
| Ripple | 3% rms @ 10KVDC, 2000mA |
| Regulation, load | +2% from no load to full load @ maximum output |
| Regulation, line output | +2% for line voltage from 190-230 VAC @ maximum |
| CROWBAR (connected across the collector supply) | |
| Response Time | 5 microseconds |
| SYSTEM | |
| Input Voltage | 190-230 VAC phase to phase, 3 phase, 60Hz, 30KVA |
| Power Connection | 5 position terminal board (3 phase neutral ground) |

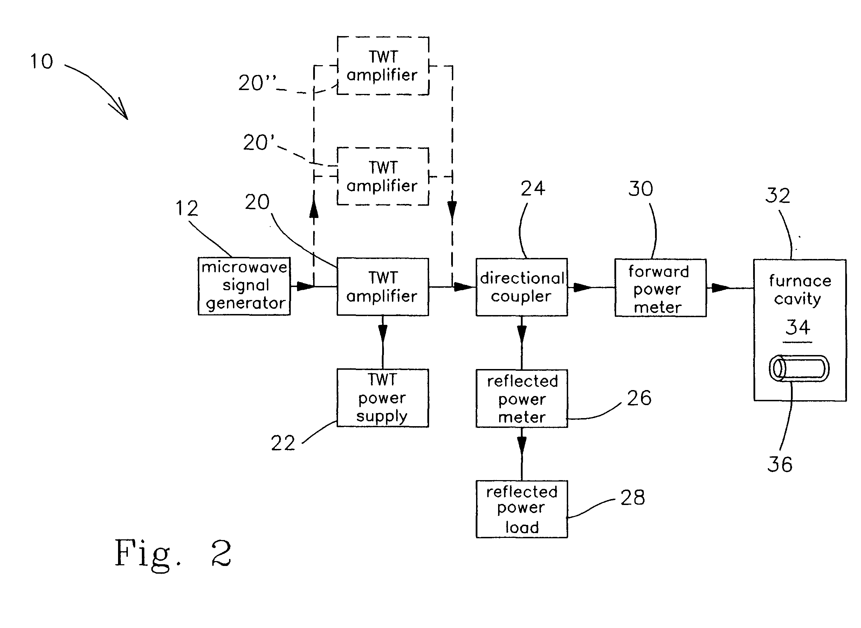

As shown in Figure 2, the variable frequency microwave heating apparatus **10** may be operated without the use of a microwave voltage-controlled oscillator means **14** and a first amplifier **18**. In this embodiment, the microwave signal generator **12** is employed independently to generate a selected signal and is output directly without further modification. One such microwave signal generator **12** is the Model 6724 signal generator manufactured by Wiltron. In this embodiment, the amplitude modulation is performed within the power supply **22** of the second amplifier **20**.

Referring to Figures 1 and 2, a directional coupler **24** is provided for detecting the direction of a signal and further directing the signal depending on the detected direction. The directional coupler **24** is provided proximate the collector end of the second amplifier **20**. A signal received from the second amplifier **20** is directed toward the microwave cavity **32**. A signal received from the direction of the microwave cavity **32** is directed toward a reflected power load **28**. The directional coupler **24** thus provides a means whereby a reflected signal - that is, power not absorbed by the workpiece **36** and therefore directed back toward the source **20** - is diverted away from the second amplifier **20** in order to protect the second amplifier **20** from power unabsorbed by the workpiece **36.** The reflected power load **28** of the preferred of heat collected through the reflection of power from the microwave cavity **32**.

A first power meter **30** is provided for measuring the power delivered to the microwave cavity **32**. The first power meter **30** is used in conjunction with a second power meter **26** positioned to measure reflected power from the microwave cavity **32** in order to monitor the efficiency of the microwave cavity 32 and to insure that reflected power is dissipated in the reflected power load **28** and not by the second amplifier **20**.

The signal output by the second amplifier **20** is introduced into the microwave cavity **34** for absorption by the selected workpiece **36**. Typically, the introduced signal is not completely absorbed by the workpiece **36** and is therefore reflected back toward the second amplifier **20**, having no other path to follow.

The reflected signal reaches the directional coupler **24** and is there diverted toward the second power meter **26** and finally to the reflected power load **28**. The reflected power is dissipated in the reflected power load **28**, as previously mentioned, in an attempt to protect the longevity of the second amplifier **20**. The reflected power load **28** may also be used to test the functionality of the system by removing all workpieces **36** from the microwave cavity **34**, thus directing the entire load from the second amplifier **20** into the reflected power load **28**. Comparisons can be made of the power received by the reflected power load **28** and the power delivered from the second amplifier **20** to determine any system losses.

The magnitude of the reflected power is detected by the second power meter **26**. This magnitude may be used to determine the efficiency of the instant frequency of the microwave introduced into the microwave cavity **34**. A lower reflected power will indicate a more efficient operating frequency due to the higher absorption rate of the selected workpiece **36**.

From the foregoing description, it will be recognized by those skilled in the art that a variable frequency microwave heating apparatus **10** offering advantages over the prior art has been provided. Specifically, the microwave heating apparatus **10** of the present invention provides a means for adjusting the frequency of the microwaves introduced into a cavity **34** for sintering purposes, or as otherwise required. It will be seen that the microwave heating apparatus **10** of the present invention is useful in testing the processing characteristics of selected materials with respect to microwave frequency. Such test will enable the design of a microwave furnace **32** with a microwave source **12** which generates microwaves at the determined frequency.

It will further be seen that the microwave heating apparatus **10** of the present invention is useful as a production tool in that the frequency of the microwaves may be varied for different materials or material phases. The frequency modulation may be performed during the operation of the microwave heating apparatus **10** in order to accommodate various materials and material phases. Further, the frequency modulation capability of the present invention serves as a method of mode stirring for creating a more uniform power distribution in relatively small microwave cavities **34**.

The efficiency of the variable frequency microwave heating apparatus **10** of the present invention has been displayed in various tests performed in the development process. Described below are two embodiments tested. However, it is not the intentions of the inventors to limit the present invention to such embodiments.

In the first tested embodiment, a 2.5 KW microwave furnace **32** suitable for sintering, heat treatment, and other high-temperature processes was constructed. A voltage-controlled oscillator **14**, Model VC0 100-0243 manufactured by Delphi Components, provided a low-power microwave signal, continuously variable from 4 to 8 GHz by the application of a 0 to 15 V control signal. A solid state preamplifier **18** with a variable gain option, Model NHI 4080MW-2 manufactured by National Hybrid, Inc., provided variable amplification of the signal from the voltage-controlled oscillator **14**.

A high-power microwave amplifier **20** included a traveling wave tube, Model T-1096 manufactured by Microwave Laboratories, Inc. (see Table 1), and a high-voltage DC power supply, Model BRE-15-140-ML manufactured by Universal Voltronics (see Table 2). The high-power microwave amplifier amplified the signal for a gain of approximately +37 db. The resulting microwave power was continuously selectable over a frequency range of 4 to 8 GHz and a power range of 0 to 2.5 KW. The frequency and amplitude could be individually modulated into any waveform within these parameters.

A dual directional coupler **24**, Model R202-5N manufactured by Microwave Engineering Corporation, was provided, through which the microwave power is applied. The microwave power was input to a multi-mode cavity **34** approximately 30 cm (12 in) in diameter and approximately 23 cm (9 in) long such that a wide variety of random microwave modes were excited within the cavity **34**. Forward and reflected power levels were continuously measured with two power meters, Model HP436A manufactured by Hewlett Packard.

Efficient microwave heating was demonstrated for both silicon carbide and boron carbide ceramic bodies. In each case the frequency could be adjusted to minimize reflected power for the actual load in the cavity **34**, and the ceramic heated rapidly. There was no need to adjust the dimensions of the cavity **34** or to excite any particular mode in order to heat with maximum efficiency.

In the second tested embodiment, a 300 W microwave furnace suitable at least for plasma processing, sterilization and food processing studies was constructed using the multi-mode cavity **34** from a conventional microwave oven and an air-cooled traveling wave tube with a bandwidth of 2 to 8 GHz.

Experiments with a wide variety of samples including water, popcorn, and alumina ceramics doped with Co, Cr, or V oxides demonstrated highly efficient heating when the microwave frequency was adjusted to minimize reflected power. Results showed that when the frequency was continuously swept across the operating bandwidth, reflected power was extremely low and the sample heated efficiently regardless of its location within the cavity **34**.

One such test of the variable frequency microwave heating apparatus **10** included the curing of a sample of epoxy resin, namely, ERL-2258 resin manufactured by Union Carbide and M-phenylenediamine hardener manufactured by DuPont. Samples were mixed according to manufacturers' directions and poured into 10 cm (4 in) diameter glass dishes. One sample was heated at a fixed frequency of 6 GHz whereas the other was heated in accordance with the present invention by sweeping the frequency from 4.5 to 7.5 GHz, 5000 times per second. The fixed-frequency sample suffered from nonuniform heating and ultimately catastrophic thermal runaway. The swept-frequency sample cured uniformly with no evidence of localized overheating, thereby demonstrating the value of frequency sweeping to create a more uniform power distribution within the microwave cavity **34**.

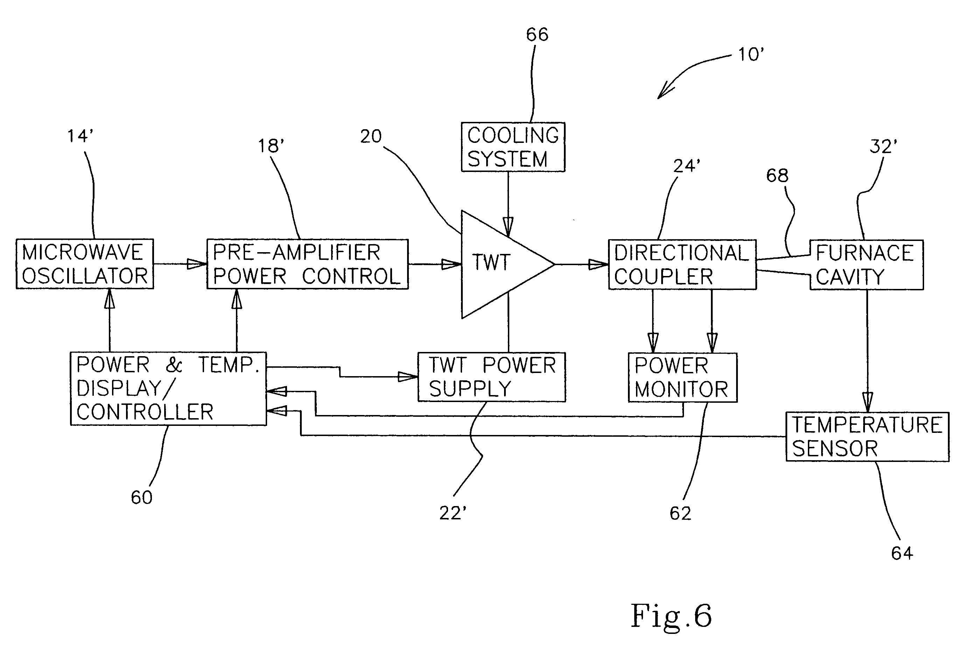

Illustrated in Figure 6 is an alternate embodiment of the variable frequency microwave heating apparatus **10'**. In this embodiment, a power and temperature display and controller **60** receives input from a power monitor **62** and a temperature sensor **64**. The power monitor **62** receives input from the directional coupler **24'** and serves the same basic functions as the reflected and forward power meters **26,30** incorporated in the previously described embodiment. The power and temperature display and controller **60** further serves to control the microwave oscillator 14', the preamplifier power control **18'**, and the TWT power supply **22'**. A cooling system **66** is provided for cooling at least the TWT **20** during operation thereof.

A tapered waveguide coupler **68** may be provided to enhance the efficiency with which the broadband microwave energy is coupled into the microwave cavity. By acting as an impedance transformer between the transmission line from the directional coupler **24'** and the microwave cavity **32'**, this transition increases the percentage power coupled into the microwave cavity **32'**. In addition, for applications in which the microwave energy must be coupled into a microwave cavity **32'** in which reactive gases are present, the tapered waveguide **68** provides a means of reducing the power density of the microwave energy at the interface between the microwave input window and reactive gases, thus preventing the formation of plasma discharges at the microwave input window.

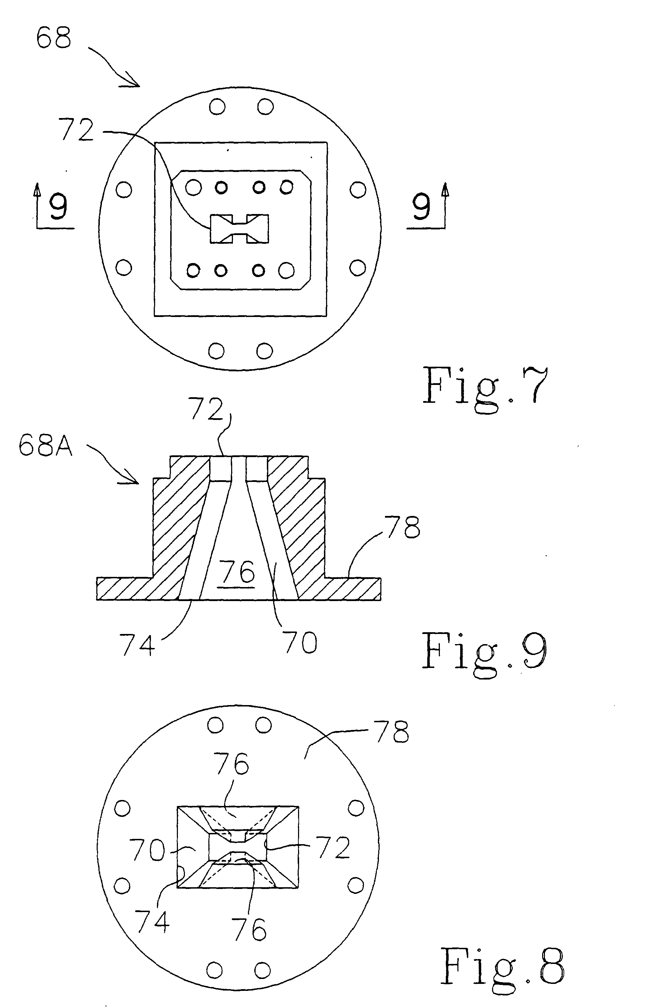

Illustrated in Figures 7-9 is a tapered waveguide applicator **68A**. Figure 7 is an end view showing the inlet opening **72**. Figure 8 illustrates and end view showing an outlet **74**. Figure 9 illustrates a cross-sectional view of the waveguide applicator **68A**, wherein the tapered inner wall **70** is more clearly detailed. It can be seen from these figures that one embodiment of the waveguide applicator **68A** defines an inner wall **70** defining a smooth taper from the inlet **72** to the outlet **74**, with the outlet **74** being a larger opening than the inlet **72**. The inner wall **70** of the waveguide applicator **68A** generally defines a rectangular opening at any given cross-section along the length thereof, with projections **76** extending from either side wall thereof. The projections 76 also define rectangular cross-sections. As illustrated in these figures, the projections define smooth tapers proportional to the taper of the inner wall **70** of the waveguide **68A**. The body of the waveguide applicator **68A** defines an end plate **78** for securement of the waveguide applicator **68A** to the microwave heating apparatus **10.**

In practice, it has been found that a free-space voltage standing wave ratio, or VSWR, of approximately 2:1 measured over the entire useful range of the microwave cavity **34** is achieved using the waveguide applicator **68A** of Figures 7-9.

A variable frequency microwave heating apparatus 10 has been constructed for testing purposes using a 4-8 GHz Model T-1096 TWT source manufactured by Microwave Laboratories, Inc., and incorporating the tapered waveguide applicator **68A** illustrated in Figures 7-9. A generally cylindrical multi-mode microwave cavity **34** was also used. Results of the testing are discussed by R.A. Rudder et al., "Diamond CVD Via Microwave-Excited Plasma from Water-Ethanol Solutions," Amer. Cer. Soc. Spring Meeting, Cincinnati, OH, 1993, which is incorporated herein by reference. In those tests, it was demonstrated that the microwave heating apparatus **10** including the waveguide applicator **68A** of the present invention created high-intensity localized plasmas that could be moved and otherwise manipulated by adjusting the frequency. Dense plasmas were maintained with as little as 100 W of forward power. Reflected power was minimal at all frequencies across the 4-8 GHz bandwidth.

The microwave source **12** described above includes a helix TWT amplifier. However, it will be understood that many other microwave sources **12** may be used in accordance with other aspects of the present invention. Table 3 below gives typical characteristics of some other suitable microwave sources **12**.

Table 3 -

| Characteristics of Some Suitable Microwave Sources: | | | | | |
|---|---|---|---|---|---|
| Source Type | Frequency Range (GHz) | Band-width (%) | Peak Output Power (kW) | Average Output Power (kW) | Overall Eff. (%) |
| Ring-loop TWT | .5-20 | 5-15 | 1-20 | .05-.6 | 30-45 |
| Ring-bar TWT | .5-20 | 10-20 | 3-30 | .08-.9 | 30-45 |
| Coupled-cavity TWT | .5-300 | 5-15 | 50-5000 | 1-300 | 40-60 |
| Klystron | .5-70 | 5-8 | 100-8000 | 1-5000 | 40-70 |
| Crossed-field Amp | .5-20 | 15-40 | 100-3000 | 1-300 | 30-50 |

The helix TWT in the above embodiment is liquid cooled, and therefore requires additional power and support equipment. For bench-scale experimentation, air-cooled variable frequency microwave heating apparatuses **10** were built using Microwave Laboratories, Inc. air-cooled helix TWT's (e.g., model T-1067) and the tapered waveguide applicator **68A** of the present invention. A 13x13x10 inch rectangular microwave cavity **34** was used, in which microwave power was coupled efficiently over the frequency range from 2.5 to 7.5 GHz. It will be recognized that this range covers almost two octaves. Tests using thermally sensitive paper demonstrated that frequency sweeping was highly effective at creating a uniform power density throughout the cavity **34**.

The microwave cavity **34** of this embodiment was subjected to similar tests described above to cure a sample of epoxy resin [ERL-2258 resin from Union Carbide and M-phenylenediamine hardener from DuPont]. In these tests, both the frequency range and the sweep rate were reduced in order to determine the minimal range necessary for adequate mode stirring. At the same time, the sample size was increased to a 6 inch diameter disk. From these results, it was evident that even a 20% bandwidth would be sufficient to produce uniform microwave heating in some samples, and particularly those in which high thermal conductivity assists in bringing minor spatial variations into equilibrium.

As discussed previously, the microwave heating apparatus **10** of the present invention may be equipped with more than one microwave source **12**. To this extent, the latter-described microwave heating apparatuses **10** were further modified by adding a second TWT (Microwave Laboratories, Inc. model T-1068) and a second tapered microwave applicator **68A**, thereby giving the furnace **32** a useful bandwidth from approximately 2.5 to 17.5 GHz, or nearly three octaves. It will be understood that the foregoing example should not be interpreted as limiting the microwave heating apparatus **10** of the present invention to two microwave sources **12**. Rather, it will be understood that any number of microwave sources **12** and waveguide applicators **68** can be combined with a single microwave cavity **34** in accordance with the present invention.

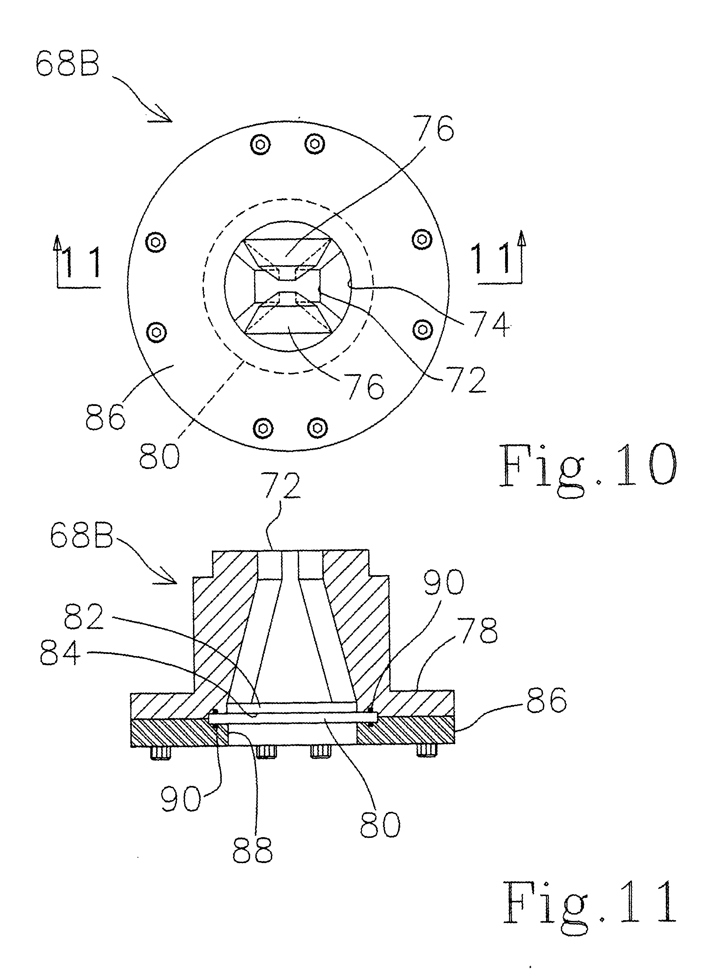

Figures 10 and 11 illustrate an alternate embodiment of the waveguide applicator **68B** wherein a window **80** is provided for use in environments wherein the pressures within the microwave cavity **34** are other than ambient and/ or gases other than air are being used in the microwave heating process. The inlet **72** of this embodiment is similar to the of the previous embodiment, therefore, Figure 7 is representative of the inlet **72** of the embodiment illustrated in Figures 10 and 11. The window **80** is dielectric in nature and can withstand positive and negative pressure differentials. The inner wall **70** of this embodiment of the waveguide applicator **68B** terminates in a cylindrical, non-tapered end **82** at the outlet **74**. The projections **76** terminate at the change of slope of the inner wall **70**. A recess **84** is defined by the end plate **78** for receiving the dielectric window **80**. A fastening plate **86** defining a centrally located opening **88** is secured to the end plate 78 and over at least the periphery of the dielectric window **80** to secure the position of the window **80** with respect to the waveguide **68B**. Sealing members **90** are placed between the window **80** and the waveguide **68B** and between the window **80** and the fastening plate **86** in order to prevent fluid communication from the microwave cavity **34** through the waveguide applicator **68B** to the outside environment.

As in the embodiment depicted in Figures 7-9, a free-space VSWR of approximately 2:1 measured over the entire useful frequency range of the microwave cavity **34** is achieved using the waveguide applicator **68B** of Figures 10-11.

It will be appreciated by those skilled in the art that many conventional techniques are available both for joining the tapered waveguide transition **68** to the furnace cavity **34** and for sealing the dielectric window **80** into the waveguide **68**. It will be further appreciated that situations may arise in which it is necessary to cool the dielectric window **80** or waveguide **68** by an appropriate flow of air, liquid coolant, or the like.

It will also be appreciated by skilled artisans that the tapered ridges are used to provide optimal matching to a ridged, broadband waveguide - the WRD 350 type, for example - and are not needed if a non-ridged waveguide is used between the microwave source **12** and the tapered waveguide transition **68**.

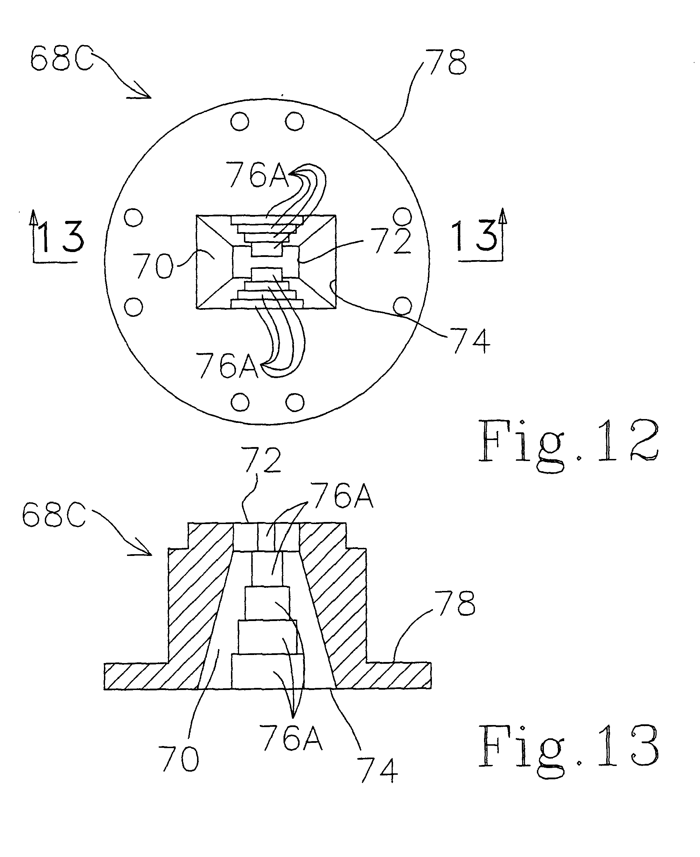

Figures 12 and 13 illustrate another alternate embodiment of the waveguide applicator **68C** of the present invention, with Figure 7 again being representative of the inlet **72**. As illustrated, the projections **76** in this embodiment define a "step" taper as opposed to the smooth taper in Figures 8 and 9. Thus, a series of rectangular projections **76A** are defined, with the length of each successive projection increasing toward the outlet **74** and with the distance between opposing projections **76A** increasing with each successive pair of opposing projections **76A.** As opposed to the smooth taper in the previous embodiments, the projections **76A** of the subject embodiment change dimensions at a finite number of discrete locations. The free-space VSWR retained in this embodiment is favorable.

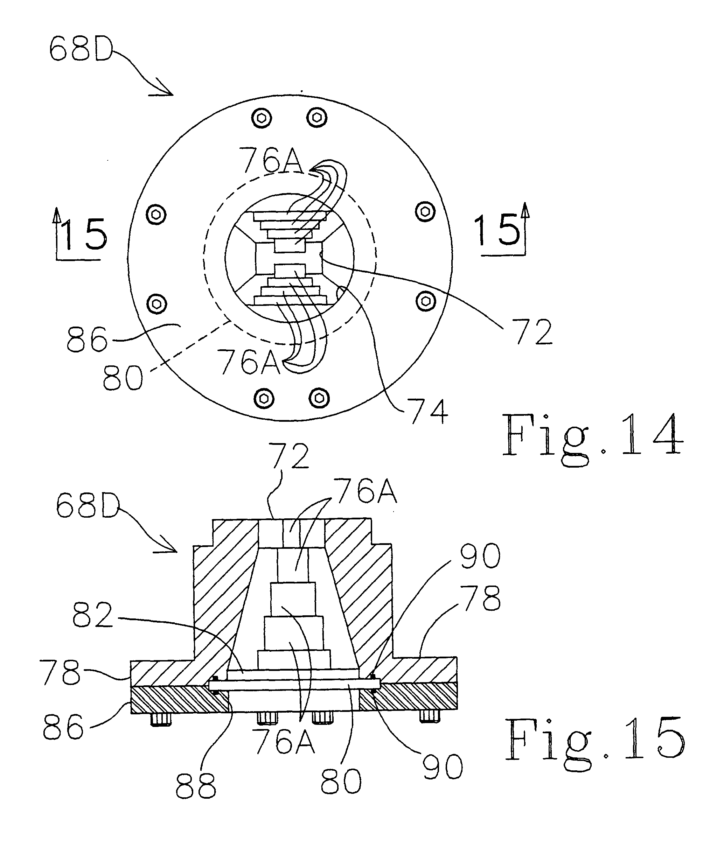

A further modification of the embodiment illustrated in Figures 12 and 13 is that embodiment illustrated in Figures 14 and 15. That embodiment further includes a dielectric window **80** secured in similar fashion to the embodiment of Figures 10 and 11.

It will be understood that when one operates microwave equipment, particularly at high power, it is necessary that the equipment be properly sealed or shielded to prevent the undesirable leakage of microwave radiation. It will be further appreciated that effective shielding becomes more difficult as the useful frequency range increases. For example, the common microwave oven operating at a fixed frequency of 2.45 GHz minimizes leakage by the use of a resonant, mechanical choke, which is ineffective at higher frequencies. Because the variable frequency microwave heating apparatus **10** of the present invention operates over a frequency range of greater than 5% bandwidth, microwave sealing techniques employed on conventional microwave ovens prove inadequate for meeting both personnel safety and communications-interference requirements.

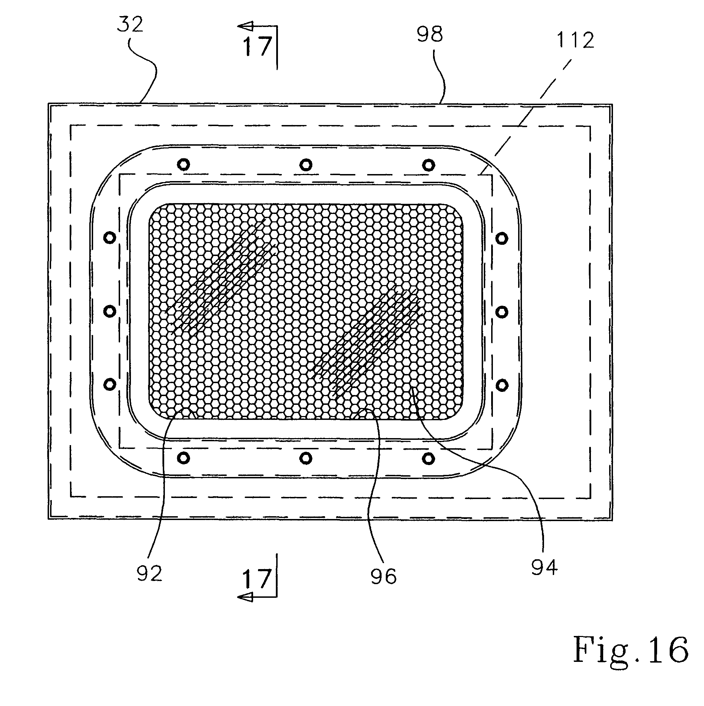

Figure 16 illustrates a front elevational view of an improved viewport **92** for visually observing sample conditions within the microwave cavity **34**. The viewport **92** includes a "honeycomb" metal filter **94** in which the hex-cell diameter is small in relation to its depth. For example, one suitable proportion was found to be approximately 0.061 inches in diameter by 1.0 inch (1 inch = 2.54cm) thick. This configuration provides at least 250 dB of attenuation at frequencies as high as 20 GHz. This filter **94** is placed between opposing plates **96** of transparent glass such as fused quartz to form the microwave seal for the viewport **92.**

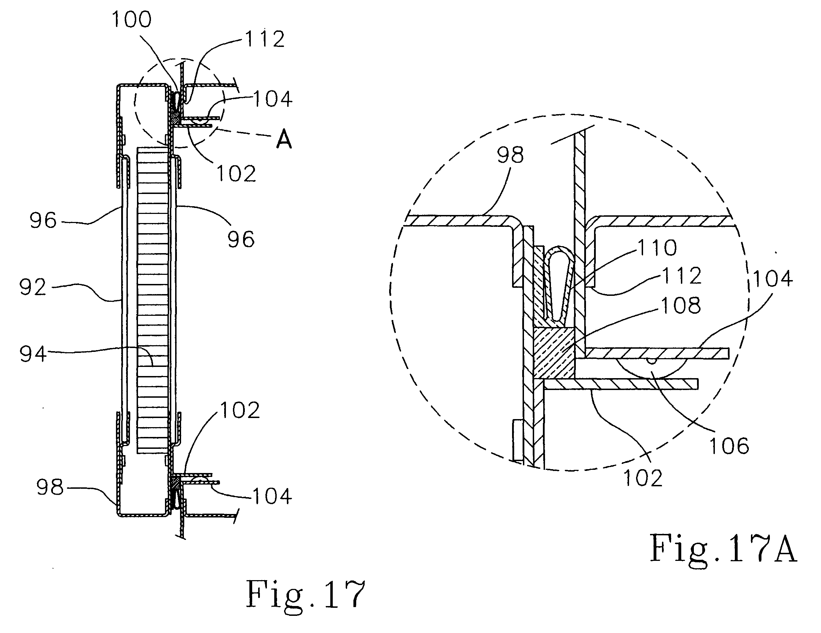

Because the microwave seal on the cavity door **98** is also essential to both personnel and communications protection, a four-stage microwave seal **100** is provided in the present invention as illustrated in Figure 17, and more clearly in Figure 17A. A two-ring seal **102,104** protrudes into the cavity **34** with one ring **102** attached to the door **98** and one ring **104** to the microwave furnace **32** inside the cavity **34**. A spacing between the rings **102,104** acts as a cut-off waveguide, especially at frequencies below 4 GHz. One suitable spacing which has been determined is 0.06 inches. The ring seal **104** carried by the microwave furnace **32** inside the cavity **34** carries a compressible strip **106** such as beryllium copper which provides, in the illustrated embodiment, over 70 dB of attenuation at 10 GHz. The ring seal **102** carried by the door **98** compresses the strip **106** upon closure of the door **98**. Carried around the door opening **112** on the cavity **34** is a compressible strip **108** such as monel mesh which is used as a slightly compressible door stop. The monel mesh **108** of the preferred embodiment provides an additional 80 dB of attenuation at 10 GHz. Finally, around the compressible strip **108** on the cavity **34** is a compressible strip **110** defining a substantially "e"-shaped cross-section. The compressible strip **110** of the preferred embodiment is a carbon-filled, silicone elastomer strip and is used to provide an additional 75 dB of attenuation at 10 GHz. The net result of this shielding of the viewport **92** and door **98** closure is that no detectable microwave leakage is measured from the variable frequency microwave heating apparatus cavity **34** at any frequency between 2.4 and 17.5 GHz. No microwave leakage has been detected even as great as 0.001 of the safe level. Those skilled in the art will recognize that the above-described microwave sealing configuration might well use various combinations of the techniques described depending upon the frequency range and power levels to be sealed and/or shielded against.

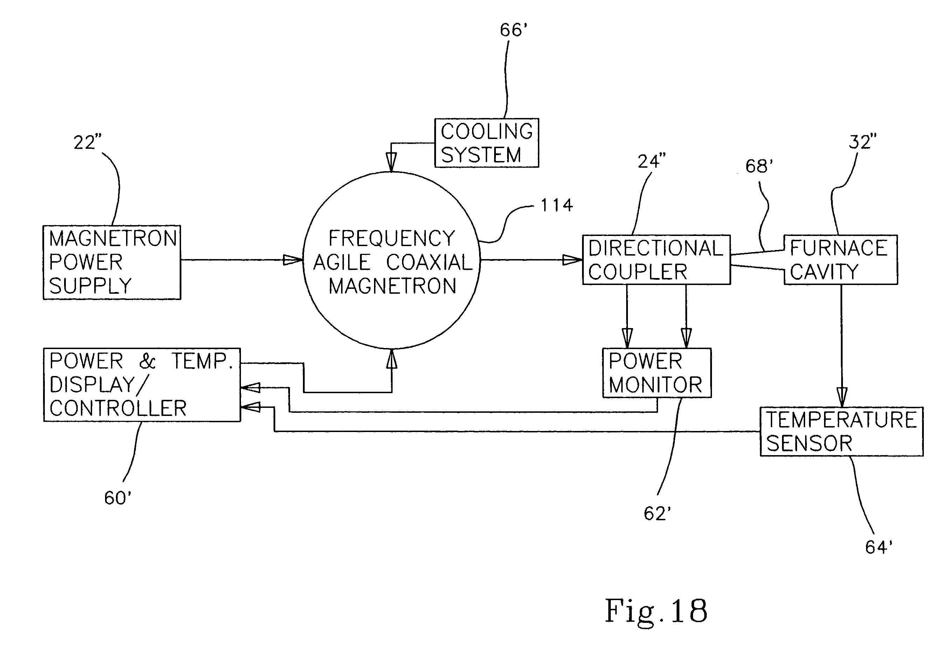

Illustrated in Figure 18 is an alternate embodiment of the variable frequency microwave heating apparatus 10 of the present invention. In this alternate embodiment, a high-power oscillator **114** such as a frequency-agile coaxial magnetron is substituted for the microwave oscillator **14**, the pre-amplifier power control **18** and the TWT **20** of the previously described embodiments. The magnetron **114** of the preferred embodiment has a usable bandwidth of at least 5% of its center frequency. The magnetron **114** is frequency-controlled either manually or, preferably, through a closed-loop, voltage-based feedback control system. In such a feedback control system, a low-level (0 to 10 V) signal is used to activate a servo-mechanism in the magnetron **114** which "tunes" the magnetron **114** from one frequency to another by precise repositioning of a plunger plate in the magnetron's coaxial cavity.

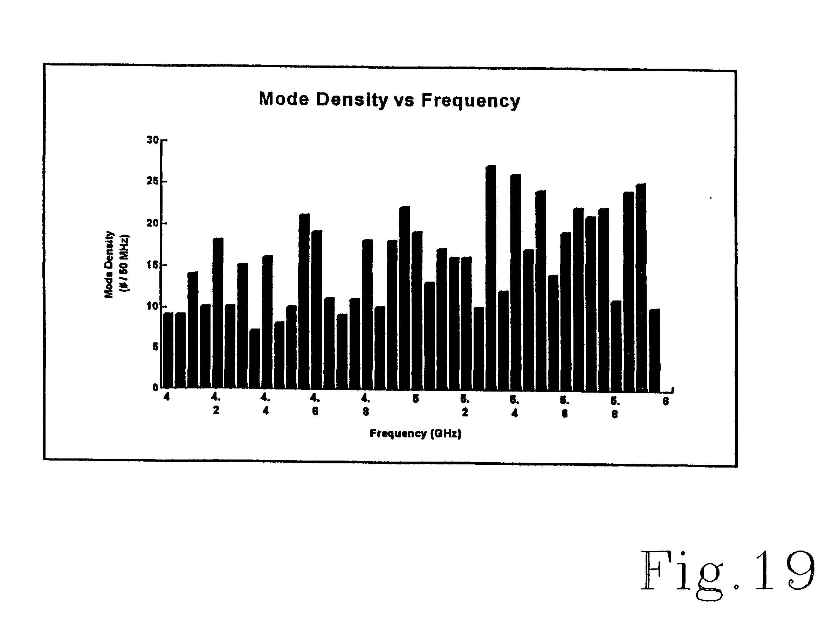

To better determine the limiting factor on required bandwidth, a theoretical model of a 12x12x10 inch rectangular microwave cavity **34** was constructed and used to determine the number of resonant modes capable of being supported in the cavity **34** over the 4 to 6 GHz frequency range. The results of these calculations clearly demonstrate that, even in a cavity **34** this small, there are an enormous number (over 600) of possible, closely-spaced modes (often 3 to 4 at a single frequency) over even the 4 to 6 GHz frequency range. These results have been graphically illustrated in Figure 19 as mode density versus frequency. From these results, it is clear that a bandwidth of as little as 5% of the center frequency could, in some cases, provide sufficient mode plurality to provide relatively uniform energy distribution in the microwave cavity **34**.

Using this theoretical model, power density was calculated as a function of location at various points along a horizontal midplane of the microwave cavity. The first case examined assumed a center frequency of 5 GHz. As shown in the figures, as the percent bandwidth decreased, the power distribution became-progressively less uniform, where bandwidth is defined as the difference between the high and low frequencies divided by the center frequency, or:

$$(f_{high} - f_{low}) / f_{center}.$$

The power density for bandwidths greater than about 10% is fairly uniform, whereas the power density becomes somewhat less uniform for a 5% bandwidth. The second case assumed a center frequency of 15 GHz and power density was mapped for bandwidths ranging from 40% down to 1.3%. In this case, for a bandwidth as low as 2.5%, the power density was quite uniform compared to the previous case. Even when the bandwidth was further reduced to only 1.3%, the power density was sufficiently uniform for many microwave heating applications.

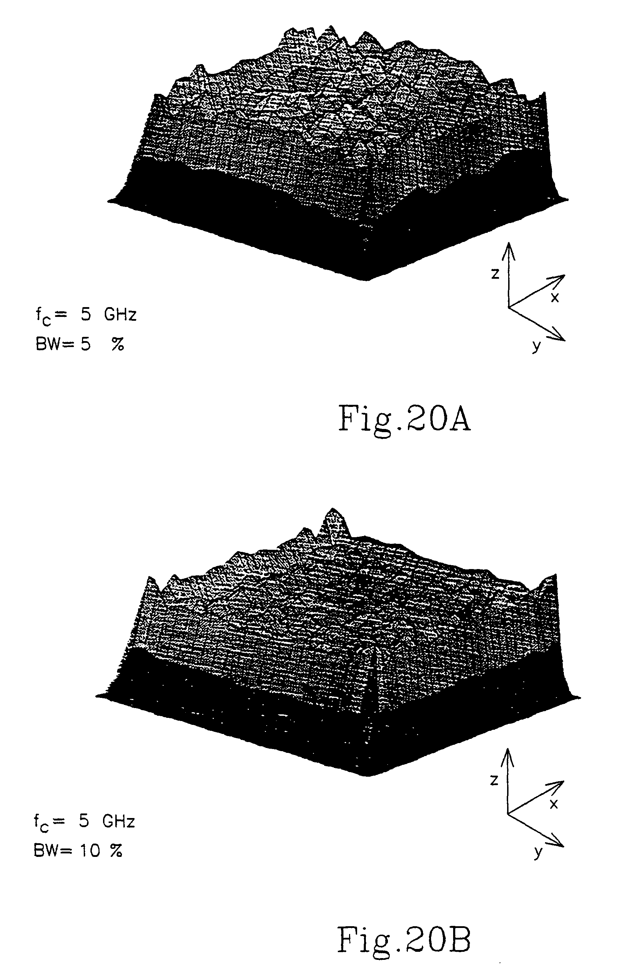

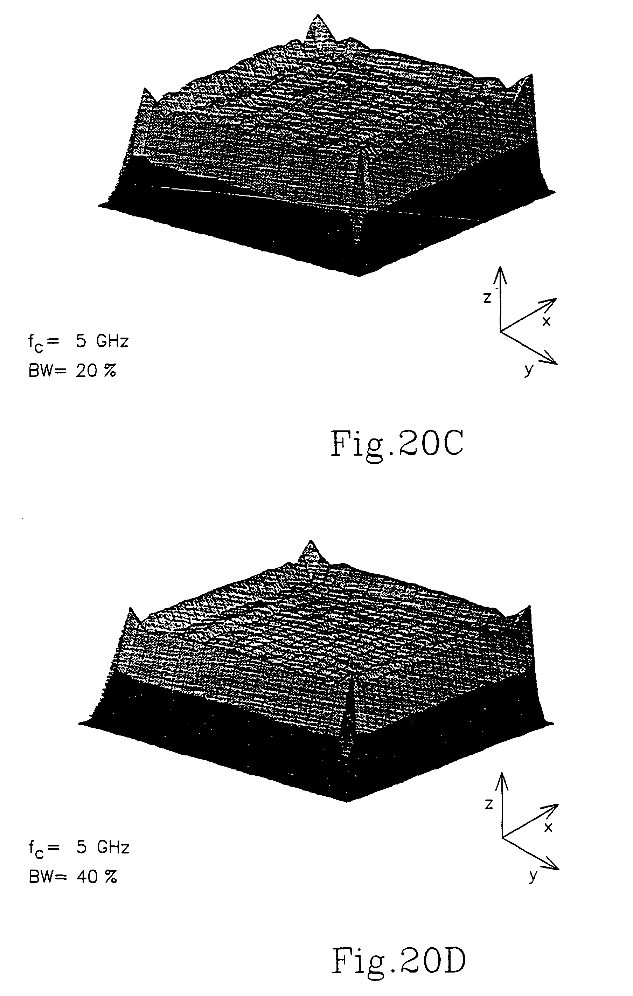

Figures 20A-D illustrate power maps using the above theoretical model and a center frequency of 5 GHz. A power map, as used in this context, is a three-dimensional graph showing the power at various points across the microwave cavity **34.** The power is shown as the z-coordinate, with the x- and y-coordinates being the floor plan of the microwave cavity **34**. The bandwidth for each respective map is 5%, 10%, 20%, and 40%. It will be noted that the power distribution throughout the microwave cavity **34** becomes more even as the bandwidth increases.

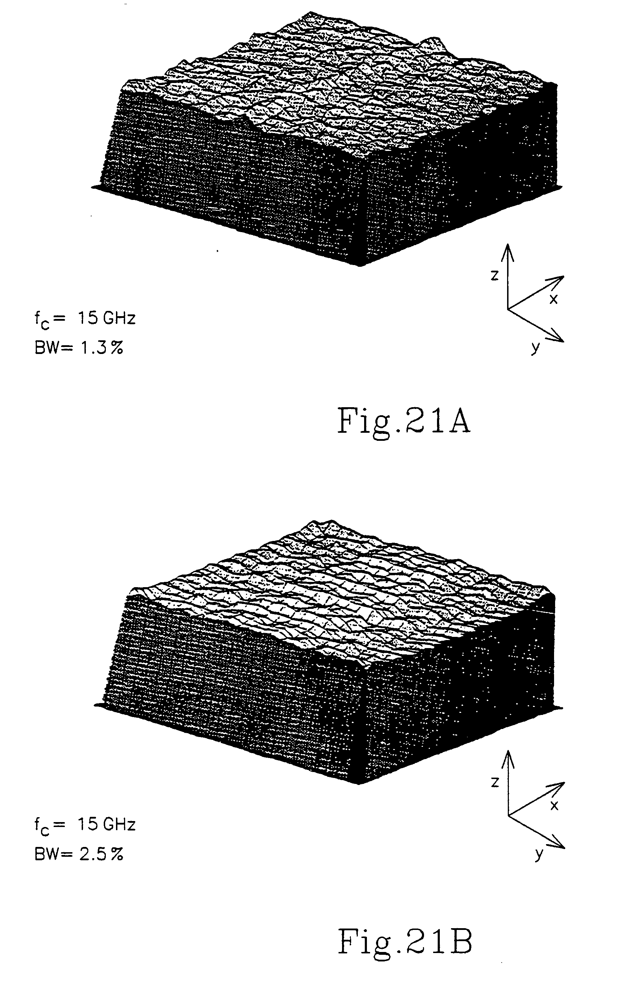

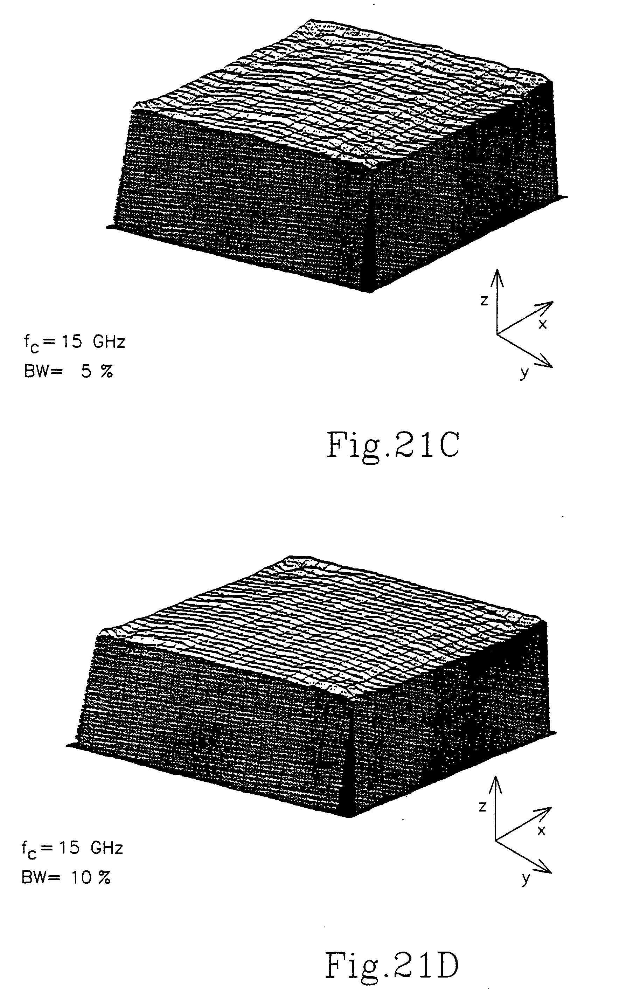

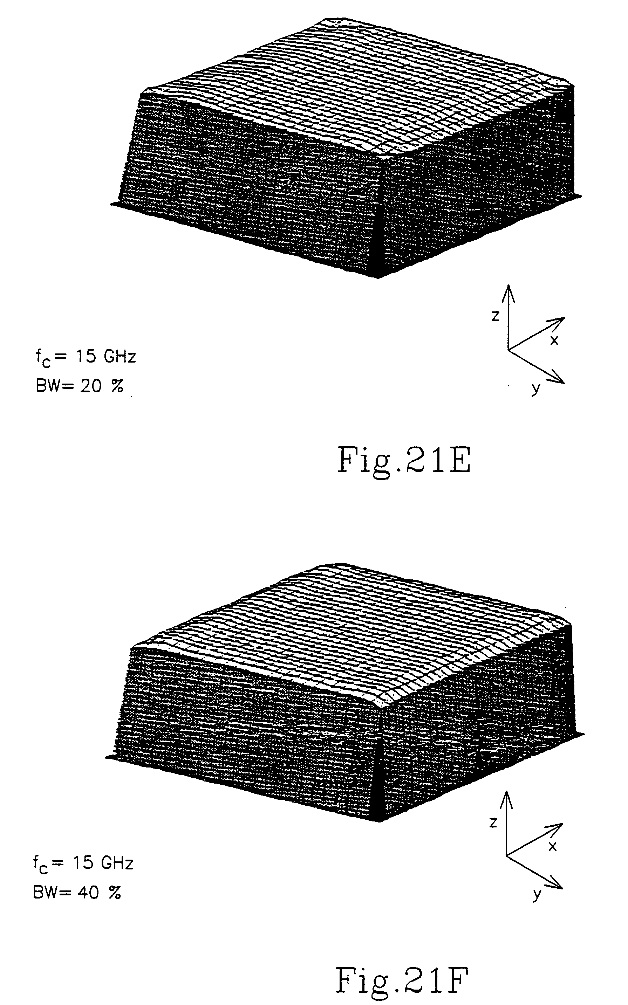

Similarly, Figures 21A-F illustrate power maps using the same theoretical model and a center frequency of 15GHz. The respective bandwidths are 1.3%, 2.5%, 5%, 10%, 20%, and 40%. Again, for a bandwidth of 1.3%, the power distribution varies noticeably from point to point. However, for a useful bandwidth of 40%, the power distribution is substantially smooth.

The theoretical results have been tested to prove accuracy using thermal paper in a microwave cavity **34**, with the microwave sources **12** being selected from those theorized. Hot spots, or locations having higher power distributions, caused the thermal paper to turn brown, while colder spots left the thermal paper white. The results of these tests confirmed those of the theoretical testing discussed above.

While several preferred embodiments have been shown and described, and several embodiments which have been constructed and tested have been specifically delineated, it will be understood that such descriptions are not intended to limit the disclosure, but rather it is intended to cover all modifications and alternate methods falling within the scope of the invention as defined in the appended claims.

**Claims**

1.  A variable frequency microwave heating apparatus (10, 10') for processing selected materials, said variable frequency microwave heating apparatus including a microwave furnace (32, 32', 32") which defines a multi-mode cavity for processing said selected materials, and said variable frequency microwave heating apparatus comprising:

    a microwave signal generator (12, 14, 14', 22") for generating a signal with a selected waveform, frequency, and amplitude;
    a first signal amplifier (20, 20', 20") for amplifying said signal generated by said signal generator, said first signal amplifier producing microwaves in a sweeping fashion though a selected useful bandwidth defining a center frequency, said microwaves having an associated power with a selected magnitude, said first signal amplifier comprising a microwave electron device wherein said useful bandwidth is at least five percent of said center frequency, whereby a plurality of independent microwave modes is established in said multi-mode cavity such that a substantially uniform time-averaged power density is created over a working volume of said multi-mode cavity;
    a power supply (22, 22') for supplying power to said first signal amplifier; and
    a transmitter for conveying said microwaves produced by said first signal amplifier into said microwave furnace.

2.  The variable frequency microwave heating apparatus according to claim 1, wherein said microwave electron device is selected from the group consisting of a traveling wave tube, a twystron, a klystron, a crossed-field amplifier and a gyrotron.

3.  The variable frequency microwave heating apparatus according to claim 1. wherein said power supply is adjustable, thereby allowing said amplitude of said signal generated by said signal generator to be selectively modulated.

4.  The variable frequency microwave heading apparatus according to claim 1, further comprising a signal amplitude controller for selectively modulating said amplitude of said signal generated by said signal generator.

5.  The variable frequency microwave heating apparatus of Claim 1 further comprising a second amplifier (18) *for* selectively amplifying said signal generated by said signal generator prior to amplification by said first amplifier.

6.  The variable frequency microwave heating apparatus of claim 1. comprising:

    a signal director (24, 24', 24") for directing said microwaves produced by said first amplifier and microwaves reflected from said microwave furnace; and
    a reflected load dissipator (28) for dissipating said microwaves reflected from said microwave furnace, said microwaves reflected from said microwave furnace having an associated power and magnitude thereof.

7.  The variable frequency microwave heating apparatus of claim 6, wherein said signal director is provided with a cooling device for dissipating heat accumulated through operation of said signal director.

8.  The variable frequency microwave heating apparatus of claim 6, further comprising a system monitor for monitoring said magnitude of said power associated with said microwaves conveyed to said microwave furnace (32, 32', 32") and said magnitude of said power associated with said microwaves reflected from said microwave furnace, said system monitor serving to monitor an efficiency of said variable frequency microwave heating apparatus.

9.  The variable frequency microwave heating apparatus of claim 1 further comprising a pre-amplifier to achieve required levels of microwave power delivered into said microwave cavity with a selected drive level of said signal generator.

10. An apparatus according to claim 1, wherein said transmitter comprises a tapered waveguide (68, 68A, 68B, 68C, 68D) defined by an interior wall being smoothly tapered from an inlet to an outlet to provide free-space voltage standing wave ratio of at least 3:1 over a useful frequency band of said first signal amplifier.

11. The variable frequency microwave heating apparatus of claim 10 further comprising a waveguide applicator including said waveguide and a dielectric window for protecting said variable frequency microwave heating apparatus when said multi-mode cavity is subjected to pressures other than ambient pressure.

12. The variable frequency microwave heating apparatus of claim 11, further comprising a cooling device for cooling said dielectric window.

13. The variable frequency microwave heating apparatus of claim 11, further comprising a cylindrical transition to match an impedance discontinuity between said waveguide and said dielectric window.

14. The variable frequency microwave heating apparatus of claim 10 wherein said waveguide is defined by an interior wall being tapered in a stepped fashion from an inlet to an outlet to provide free-space voltage standing wave ratio of at least 3:1 over a useful frequency band of said first signal amplifier.

15. The variable frequency microwave heating apparatus of Claim 14 wherein said waveguide applicator further includes a dielectric window for protecting said variable frequency microwave heating apparatus when said multi-node cavity is subjected to pressures other than ambient pressure.

16. The variable frequency microwave heating apparatus of Claim 15 further comprising a cooling device for cooling said dielectric window.

17. The variable frequency microwave heating apparatus of Claim 15 further comprising a cylindrical transition to match an impedance discontinuity between said waveguide and said dielectric window.

18. The variable frequency microwave heating apparatus of claim 1, further comprising a door (98) disposed against a surface thereof and a seal (100) to prevent leakage of said microwave signals, said surface defining an opening through which said selected materials are placed into and taken out of said multi-mode cavity (34), said seal being comprised of at least one chosen from the group consisting of: a first ring (104) carried within said microwave cavity proximate to and extending away from said opening, a second ring (102) carried by said door and dimensioned to be received within said first ring, and a compressible seal member (106) carried between said first ring and said second ring such that a seal is formed when said ring is received by said first ring; at least one gasket carried by said door and positioned thereon to engage said surface of said multi-mode cavity to encircle said opening when said door is in a closed position; and at least one seal being fabricated from a compressible, microwave-absorbent polymeric material and being carried by said door and positioned thereon to engage said surface of said multi-mode cavity to encircle said opening when said door is in a closed position.

19. The variable frequency microwave heating apparatus according to claim 1, wherein said multi-mode cavity further includes a viewport (92) for observing said selected materials during processing, said viewport incorporating a microwave shield (94) to prevent leakage of said microwave signals.

20. A variable frequency microwave heating apparatus (10, 10') for processing selected materials, said variable frequency microwave heating apparatus including a microwave furnace (32, 32', 32") which defines a multi-mode cavity for processing said selected materials, and said variable frequency microwave heating apparatus comprising:

a microwave signal generator for generating microwaves in a sweeping fashion through a selected useful bandwidth defining a center frequency, each said microwave defining a selected waveform, frequency, and amplitude, said microwave signal generator being a frequency-agile coaxial magnetron (114) said magnetron wherein said useful bandwidth is at least five percent of said center frequency thereof; whereby a plurality of independent microwave modes is established in said multi-mode cavity such that a substantially uniform time-averaged power density is created over a working volume of said multimode cavity;
a power supply (22") for supplying power to said microwave signal generator (114); and
a transmitter (24, 24', 24") for conveying said microwaves produced by said microwave signal generator into said multi-mode cavity

21. The variable frequency microwave heating apparatus of claim 20 wherein said power supply is adjustable, thereby allowing said amplitude of said signal generated by said microwave signal generator to be selectively modulated.

22. The variable frequency microwave heating apparatus of claim 20 further comprising a signal frequency controller for controlling a frequency of oscillation of said coaxial magnetron.

23. The variable frequency microwave heating apparatus of claims 20 wherein said waveguide is defined by an interior wall being smoothly tapered from an inlet to an outlet to provide free-space voltage standing wave ratio of at least 3:1 over a useful frequency band of said coaxial magnetron.

24. The variable frequency microwave heating apparatus of claim 23 further comprising a waveguide applicator including said waveguide and a dielectric window for protecting said variable frequency microwave heating apparatus when said multi-mode cavity is subjected to pressures other than ambient pressure.

25. The variable frequency microwave heating apparatus of claim 24 comprising a cooling device for cooling said dielectric window.

26. The variable frequency microwave heating apparatus of claim 24 further comprising a cylindrical transition to match an impedance discontinuity between said waveguide and said dielectric window.

27. The variable frequency microwave heating apparatus of claim 20
wherein said waveguide is defined by an interior wall being tapered in a stepped fashion from an inlet to an outlet to provide a free-space voltage standing wave ratio of at least 3:1 over a useful frequency band of said coaxial magnetron.

28. The variable frequency microwave heating apparatus of claim 27 further comprising a waveguide applicator including said waveguide and a dielectric window for protecting said variable frequency microwave heating apparatus when said multi-mode cavity is subjected to pressures other than ambient pressure.

29. The variable frequency microwave heating apparatus of claim 27 further comprising a cooling device for cooling said dielectric window.

30. The variable frequency microwave heating apparatus of claim 27 further comprising a cylindrical transition to match an impedance discontinuity between said waveguide and said dielectric window.

31. The variable frequency microwave heating apparatus of any of claim 20 further comprising a door (98) disposed against a surface thereof and a sea1 (100) to prevent leakage of said microwave signals, said surface defining an opening through which said selected materials are placed into and taken out of said multi-mode cavity (34), said seal being comprised of at least one chosen from the group consisting of:

a first ring (104) carried within said microwave cavity proximate to and extending away from said opening, a second ring (102) carried by said door and dimensioned to be received within said first ring, and a compressible seal member (106) carried between said first ring and said second ring such that a seal is formed when said ring is received by said first ring; at least one gasket carried by said door and positioned thereon to engage said surface of said multi-mode cavity to encircle said opening when said door is in a closed position; and at least one seal being fabricated from a compressible, microwave-absorbent polymeric material and being carried by said door and positioned thereon to engage said surface of said multi-mode cavity to encircle said opening when said door is in a closed position.

32. The variable frequency microwave heating apparatus according to claim 20 wherein said multi-mode cavity further includes a viewport (92) for observing said selected materials during processing, said viewport incorporating a microwave shield (94) to prevent leakage of said microwave signals.

**Patentansprüche**

1. Mikrowellenheizvorrichtung (10, 10') mit variabler Frequenz, für das Verarbeiten ausgewählter Materialien, wobei die Mikrowellenheizvorrichtung mit variabler Frequenz einen Mikrowellenofen (32, 32', 32") aufweist, der eine Multimodenkavität für das Verarbeiten der ausgewählten Materialien definiert und wobei die Mikrowellenheizvorrichtung mit variabler Frequenz aufweist:

einen Mikrowellensignalgenerator (12, 14, 14', 22"), um ein Signal mit einer ausgewählten Wellenform, Frequenz und Amplitude zu erzeugen,

einen ersten Signalverstärker (20, 20', 20"), um das durch den Signalgenerator erzeugte Signal zu verstärken, wobei der erste Signalverstärker Mikrowellen durch Überstreichen einer ausgewählten, zweckmäßigen Bandbreite erzeugt, die eine Mittenfrequenz definiert, wobei die Mikrowellen eine zugeordnete Leistung bzw. Energie von einer ausgewählten Größe haben, wobei der erste Signalverstärker eine Mikrowellenelektroneneinrichtung aufweist, wobei die nutzbare Bandbreite zumindest 5% der Mittenfrequenz beträgt, wodurch eine Mehrzahl unabhängiger Mikrowellenmoden in der Multimodenkavität bereitgestellt wird, so daß eine im wesentlichen gleichförmige, zeitlich gemittelte Energiedichte in einem Arbeitsvolumen der Multimodenkavität erzeugt wird,

mit einer Stromversorgung (22, 22')für das Zuführen von Energie zu dem ersten Signalverstärker, und

einem Sender für das Aussenden bzw. Übertragen der von dem ersten Signalverstärker erzeugten Mikrowellen in den Mikrowellenofen.

2. Mikrowellenheizvorrichtung mit variabler Frequenz nach Anspruch 1, wobei die Mikrowellenelektroneneinrichtung aus der Gruppe ausgewählt wird, die aus einer Wanderwellenröhre, einem Twystron, einem Klystron, einem Kreuzfeldverstärker und einem Gyrotron besteht.

3. Mikrowellenheizvorrichtung mit variabler Frequenz nach Anspruch 1, wobei die Stromversorgung einstellbar ist, um dadurch zu ermöglichen, daß die von dem Signalgenerator erzeugte Signalquelle wahlweise moduliert wird.

4. Mikrowellenheizvorrichtung mit variabler Frequenz nach Anspruch 1, welche weiterhin einen Signalamplitudenregler aufweist, um die Amplitude des von dem Generator erzeugten Signales wahlweise zu modulieren.

5. Mikrowellenheizvorrichtung mit variabler Frequenz nach Anspruch 1, die weiterhin einen zweiten Verstärker (18) zum wahlweisen Verstärken des von dem Signalgenerator erzeugten Signales vor der Verstärkung durch den ersten Verstärker aufweist.

6. Mikrowellenheizvorrichtung mit variabler Frequenz nach Anspruch 1, mit:

einem Signalrichtungsgeber (24, 24', 24"), um den durch den ersten Verstärker erzeugten und vom Mikrowellenofen reflektierten Mikrowellen eine Richtung zu geben, und

einem Verteiler (28) für reflektierte Last, um die von dem Mikrowellenofen reflektierten Mikrowellen zu verteilen, wobei die von dem Mikrowellenofen reflektierten Mikrowellen eine ihnen zukommende Energie und Größe haben.

7. Mikrowellenheizvorrichtung mit variabler Frequenz nach Anspruch 6, wobei der Signalrichtungsgeber mit einer Kühleinrichtung versehen ist, um Wärme, die sich durch den Betrieb des Signalrichtungsgebers ansammelt, abzuleiten.

8. Mikrowellenheizvorrichtung mit variabler Frequenz nach Anspruch 6, welche weiterhin einen Systemmonitor für das Überwachen der Größe bzw. des Betrages der Energie aufweist, die mit den Mikrowellen verknüpft ist, die in den Mikrowellenofen (32, 32', 32") transportiert werden, sowie für die Größe bzw. Stärke der Energie, die mit den Mikrowellen verknüpft ist, welche von dem Mikrowellenofen reflektiert werden, wobei der Systemmonitor dazu dient, die Effizienz der Mikrowellenheizeinrichtung mit variabler Frequenz zu überwachen.

9. Mikrowellenheizvorrichtung mit variabler Frequenz nach Anspruch 1, welche weiterhin einen Vorverstärker aufweist, um das erforderliche Niveau an Mikrowellenenergie zu erzielen, welche mit einem ausgewählten Treiberniveau des Signalgenerators in die Mikrowellenkavität abgegeben wird.

10. Vorrichtung nach Anspruch 1, wobei der Sender einen verjüngt zulaufenden Wellenleiter 68, 68a, 68b 68c, 68d) aufweist, der durch eine Innenwand definiert wird, die von einem Einlaß in Richtung auf einen Auslaß leicht gejüngt verläuft, um eine Spannung einer stehenden Welle im Verhältnis von zumindest 3:1 auf einem nutzbaren Frequenzband des ersten Signalverstärkers bereitzustellen.

11. Mikrowellenheizvorrichtung mit variabler Frequenz nach Anspruch 10, welcher weiterhin einen Wellenleiterapplikator aufweist, der den Wellenleiter und ein dielektrisches Fenster aufweist, um die Mikrowellenheizvorrichtung mit variabler Frequenz zu schützen, wenn die Multimodenkavität Drücken ausgesetzt wird, die sich von dem Umgebungsdruck unterscheiden.

12. Mikrowellenheizvorrichtung mit variabler Frequenz nach Anspruch 11, welche weiterhin eine Kühleinrichtung zum Kühlen des dielektrischen Fensters aufweist.

13. Mikrowellenheizvorrichtung mit variabler Frequenz nach Anspruch 11, welche weiterhin einen zylindrischen Übergang für die Anpassung eines Impedanzsprunges zwischen dem Wellenleiter und dem dielektrischen Fenster aufweist.

14. Mikrowellenheizvorrichtung mit variabler Frequenz nach Anspruch 10, wobei der Wellenleiter durch eine Innenwand definiert wird, die sich von einem Einlaß zu einem Auslaß in abgestufter Form verjüngt, um über ein nutzbares Frequenzband des ersten Signalverstärkers ein Freiraumspannungsverhältnis einer stehenden Welle von zumindest 3:1 bereitzustellen.

15. Mikrowellenheizvorrichtung mit variabler Frequenz nach Anspruch 14, wobei der Wellenlängenapplikator weiterhin ein dielektrisches Fenster für den Schutz der Mikrowellenheizvorrichtung mit variabler Frequenz bereitstellt, wenn die Multimodenkavität Drücken ausgesetzt wird, die sich vom Umgebungsdruck unterscheiden.

16. Mikrowellenheizvorrichtung mit variabler Frequenz nach Anspruch 15, welche weiterhin eine Kühleinrichtung für das Kühlen des dielektrischen Fensters aufweist.

17. Mikrowellenheizvorrichtung mit variabler Frequenz nach Anspruch 15, welche weiterhin einen zylindrischen Übergang aufweist, um eine Anpassung an einen Impedanzsprung zwischen dem Wellenleiter und dem dielektrischen Fenster vorzunehmen.

18. Mikrowellenheizvorrichtung nach Anspruch 1, welche weiterhin eine Tür (98) aufweist, die an der Oberfläche derselben angeordnet ist, sowie eine Dichtung (100) aufweist, um einen Leckaustritt der Mikrowellensignale zu verhindern, wobel die Oberfläche eine Öffnung definiert, durch welche ausgewählte Materialien in die Multimodenkavität (34) eingebracht und herausgenommen werden, wobei die Dichtung aus einem Gegenstand besteht, der aus der Gruppe ausgewählt ist, welche besteht aus: einem ersten Ring (104), der in der Mikrowellenkavität in der Nähe der Öffnung gehalten wird und sich von dieser weg erstreckt, einem zweiten Ring (102), der von der Tür getragen wird und so bemessen ist, daß er innerhalb des ersten Ringes aufgenommen werden kann, und einem komprimierbaren Dichtungsteil (106), welches zwischen dem ersten Ring und dem zweiten Ring getragen wird, so daß eine Dichtung gebildet wird, wenn der Ring von dem ersten Ring aufgenommen wird, zumindest einer Dichtung, die von der Tür getragen wird und daran so positioniert ist, daß sie mit der Oberfläche der Multimodenkavität in Eingriff tritt, um die Öffnung zu umfassen, wenn die Tür sich in einer geschlossenen Position befindet; und zumindest einer Dichtung, die aus einem komprimierbaren, Mikrowellen absorbierenden, polymeren Material hergestellt ist und von der Tür getragen und an dieser so angeordnet ist, daß sie mit der Oberfläche der Multimodenkavität in der Weise in Eingriff tritt, daß sie die Öffnung umfaßt, wenn die Tür sich in einer geschlossenen Position befindet.

19. Mikrowellenheizvorrichtung mit variabler Frequenz nach Anspruch 1, wobei die Multimodenkavität weiterhin ein Sichtfenster (92) für das Beobachten der ausgewählten Materialien während der Verarbeitung aufweist, wobei das Sichtfenster eine Mikrowellenabschirmung (94) einschließt, um den Leckaustritt der Mikrowellensignale zu verhindern.

20. Mikrowellenheizvorrichtung (10, 10') mit variabler Frequenz, für das Verarbeiten von ausgewählten Materialien, wobei die Mikrowellenheizvorrichtung mit variabler Frequenz einen Mikrowellenofen (32, 32', 32'') umfaßt, der für das Verarbeiten der ausgewählten Materialien eine Multimodenkavität definiert, und wobei die Mikrowellenheizvorrichtung mit variabler Frequenz aufweist:

einen Mikrowellensignalgenerator für das Erzeugen von Mikrowellen in einem Durchlauf durch eine ausgewählte, zweckmäßige Bandbreite, welche eine Mittenfrequez hat, wobei jede Mikrowelle eine ausgewählte Wellenform, Frequenz und Applitude definiert und wobei der Mikrowellensignalgenerator ein frequenzveränderliches, koaxiales Magnetron (114) ist [dessen Frequenz manuell, maschinell oder elektrisch abgestimmt werden kann], wobei die nutzbare Bandbreite zumindest 5% der Mittenfrequenz des Bandes beträgt, wodurch eine Mehrzahl von unabhängigen Mikrowellenmoden in der Multimodenkavität bereitgestellt werden, so daß

17

eine im wesentlichen gleichförmige zeitgemittelte Energiedichte in einem Arbeitsvolumen der Multimodenkavität erzeugt wird,
eine Stromversorgung (22") zum Zuführen von Energie zu dem Mikrowellensignalgenerator (114), und
einem Sender (24, 24', 24"), um die durch den Mikrowellensignalgenerator erzeugten Mikrowellen in die Multimodenkavität zu übertragen.

21. Mikrowellenheizvorrichtung mit variabler Frequenz nach Anspruch 20, wobei die Stromversorgung einstellbar ist, um dadurch zu ermöglichen, daß die Amplitude des von der Mikrowellensignalgenerator erzeugten Signales wahlweise moduliert wird.

22. Mikrowellenheizvorrichtung mit variabler Frequenz nach Anspruch 20, welche weiterhin einen Signalfrequenzregler aufweist für das Regeln einer Oszillationsfrequenz des koaxialen Magnetrons.

23. Mikrowellenheizvorrichtung mit variabler Frequenz nach Anspruch 20, wobei der Wellenleiter definiert wird durch einen Innenwand, die gleichmäßig verjüngt von einem Einlaß zu einem Auslaß verläuft, um ein Freiraumspannungsverhältnis einer stehenden Welle von zumindest 3:1 auf dem nutzbaren Frequenzband des koaxialen Magnetrons bereitzustellen.

24. Mikrowellenheizvorrichtung mit variabler Frequenz nach Anspruch 23, welche weiterhin eine Wellenleiteranbringvorrichtung aufweist, die den Wellenleiter und ein dielektrisches Fenster für den Schutz der Mikrowellenheizeinrichtung mit variabler Frequenz umfaßt, wenn die Multimodenkavität Drücken ausgesetzt ist, die sich vom Umgebungsdruck unterscheiden.

25. Mikrowellenheizvorrichtung mit variabler Frequenz nach Anspruch 24, welche eine Kühleinrichtung für das Kühlen des dielektrischen Fensters aufweist.

26. Mikrowellenheizvorrichtung mit variabler Frequenz nach Anspruch 24, welche einen zylindrischen Übergang aufweist, um eine Anpassung an einen Impedanzsprung zwischen dem Wellenleiter und dem dielektrischen Fenster vorzunehmen.

27. Mikrowellenheizvorrichtung mit variabler Frequenz nach Anspruch 20, wobei der Wellenleiter definiert wird durch eine Innenwand, die in abgestufter Weise verjüngt von einem Einlaß zu einem Auslaß verläuft, so daß im freien Volumen ein Spannungsverhältnis einer stehenden welle von zumindest 3:1 auf einem nutzbaren Frequenzband des koaxialen Magnetrons bereitgestellt wird.

28. Mikrowellenheizvorrichtung mit variabler Frequenz nach Anspruch 27, welche weiterhin einen Wellenlängenapplikator aufweist, der den Wellenleiter und ein dielektrisches Fenster für den Schutz der Mikrowellenheizvorrichtung mit variabler Frequenz aufweist für den Fall, daß die Multimodenkavität Drücken ausgesetzt wird, die sich vom Umgebungsdruck unterscheiden.

29. Mikrowellenheizvorrichtung mit variabler Frequenz nach Anspruch 27, welche weiterhin eine Kühleinrichtung für das Kühlen des dielektrischen Fensters aufweist.

30. Mikrowellenheizvorrichtung mit variabler Frequenz nach Anspruch 27, welche weiterhin einen zylindrischen Übergang für die Anpassung eines Impedanzsprunges zwischen dem Wellenleiter und dem dielektrischen Fenster aufweist.

31. Mikrowellenheizvorrichtung mit variabler Frequenz nach einem der Ansprüche 20 bis 30, welche weiterhin eine Tür (98) aufweist, die an einer Oberfläche der Vorrichtung angeordnet ist, sowie eine Dichtung, um einen Leckaustritt von Mikrowellensignalen zu verhindern, wobei die Oberfläche eine Öffnung definiert, durch welche die ausgewählten Materialien in die Multimodenkavität (34) ein- und aus dieser ausgebracht werden, wobei die Dichtung aus zumindest einem Gegenstand besteht, der ausgewählt wird aus der Gruppe die besteht aus:

ein erster Ring (104), der in der Mikrowellenkavität in der Nähe der Öffnung gehalten wird und sich von dieser weg erstreckt, ein zweiter Ring (102), der von der Tür gehalten wird und der so bemessen ist, daß er innerhalb des ersten Ringes aufgenommen wird, und ein komprimierbares Dichtungselement (106), welches zwischen dem ersten Ring und dem zweiten Ring gehalten wird, so daß eine Dichtung gebildet wird, wenn der zweite Ring von dem ersten Ring aufgenommen wird, wobei zumindest eine Dichtung von der Tür getragen wird und daran so angeordnet ist, daß sie mit der Oberfläche der Multimodenkavität in Eingriff tritt, um die Öffnung zu umfassen, wenn die Tür sich in einer geschlossenen Position befindet, und zumindest eine Dichtung, die aus einem komprimierbaren, Mikrowellen absorbierenden polymeren Material hergestellt ist und die von der Tür getragen wird und daran so angeordnet ist, daß sie mit der Oberfläche der Multimodenkavität in Eingriff tritt, um die Öffnung zu umfassen, wenn sich die Tür in einer geschlossenen Position befindet.

32. Mikrowellenheizvorrichtung mit variabler Frequenz nach Anspruch 20, wobei die Multimodenkavität weiterhin einen Sichtanschluß bzw. ein Sichtfenster (92) aufweist, um die ausgewählten Materialien während der Verarbeitung zu beobachten, wobei das Sichtfenster eine Mikrowellenabschirmung (94) beinhaltet, um einen Leckaustritt der Mikrowellensignale zu verhindern.

## Revendications

1. Appareil de chauffage hyperfréquence à fréquence variable (10, 10') pour le traitement de matières sélectionnées, ledit appareil de chauffage hyperfréquence à fréquence variable comprenant un four hyperfréquence (32, 32', 32") qui définit une cavité multimode pour le traitement desdites matières sélectionnées et ledit appareil de chauffage hyperfréquence à fréquence variable comprenant :

un générateur de signal hyperfréquence (12, 14, 14', 22") pour produire un signal ayant une forme d'onde, une fréquence et une amplitude sélectionnées ;
un premier amplificateur de signal (20, 20', 20") pour l'amplification dudit signal produit par ledit générateur de signal, ledit premier amplificateur de signal produisant des hyperfréquences par balayage quoiqu'une largeur de bande sélectionnée utile définisse une fréquence centrale, lesdites hyperfréquences ayant une puissance associée à une grandeur sélectionnée, ledit premier amplificateur de signal comprenant un dispositif électronique hyperfréquence dans lequel ladite largeur de bande utile est au moins cinq pour cent de ladite fréquence centrale, grâce à quoi une pluralité de modes hyperfréquences indépendants est établie dans ladite cavité multimode de sorte qu'une densité d'énergie sensiblement uniforme en moyenne dans le temps est créée sur un volume de travail de ladite cavité multimode ;
une alimentation en énergie (22, 22') pour amener de l'énergie audit premier amplificateur de signal ; et
un émetteur pour transporter lesdites hyperfréquences produites par ledit premier amplificateur de signal dans ledit four hyperfréquence.

2. Appareil de chauffage hyperfréquence à fréquence variable selon la revendication 1, dans lequel ledit dispositif électronique hyperfréquence est sélectionné dans le groupe constitué d'un tube à ondes progressives, un twystron, un klystron, un amplificateur à champs croisés et un gyrotron.

3. Appareil de chauffage hyperfréquence à fréquence variable selon la revendication 1, dans lequel ladite alimentation en énergie est réglable, permettant de ce fait à ladite amplitude dudit signal produit par ledit générateur de signal d'être modulée de manière sélective.

4. Appareil de chauffage hyperfréquence à fréquence variable selon la revendication 1, comprenant de plus une unité de commande d'amplitude de signal pour moduler de manière sélective ladite amplitude dudit signal produit par ledit générateur de signal.

5. Appareil de chauffage hyperfréquence à fréquence variable selon la revendication 1, comprenant de plus un second amplificateur (18) pour amplifier de manière sélective ledit signal produit par ledit générateur de signal avant amplification par ledit premier amplificateur.

6. Appareil de chauffage hyperfréquence à fréquence variable selon la revendication 1, comprenant :

un dispositif d'orientation de signal (24, 24', 24") pour orienter lesdites hyperfréquences produites par ledit premier amplificateur et les hyperfréquences réfléchies en provenance dudit four hyperfréquence ; et
un dissipateur de charge réfléchie (28) pour la dissipation desdites hyperfréquences réfléchies en provenance dudit four hyperfréquence, lesdites hyperfréquences réfléchies en provenance dudit four hyperfréquence ayant une énergie associée et la grandeur de ces dernières.

7. Appareil de chauffage hyperfréquence à fréquence variable selon la revendication 6, dans lequel ledit dispositif d'orientation de signal est muni d'un dispositif de refroidissement pour la dissipation de la chaleur accumulée par la mise en oeuvre dudit dispositif d'orientation de signal.

8. Appareil de chauffage hyperfréquence à fréquence variable selon la revendication 6, comprenant de plus un dispositif de contrôle de système pour le contrôle de ladite grandeur de ladite énergie associée auxdites hyperfréquences transportées vers ledit four hyperfréquence (32, 32', 32") et de ladite grandeur de ladite énergie associée auxdites hyperfréquences réfléchies en provenance dudit four hyperfréquence, ledit dispositif de contrôle de système servant à contrôler le rendement dudit appareil de chauffage hyperfréquence à fréquence variable.

9. Appareil de chauffage hyperfréquence à fréquence variable selon la revendication 1, comprenant de plus un préamplificateur pour obtenir des niveaux requis d'énergie hyperfréquence délivrée dans ladite cavité hyperfréquence avec un niveau d'attaque sélectionné dudit générateur de signal.

10. Appareil selon la revendication 1, dans lequel ledit émetteur comprend un guide d'ondes allant en s'amincissant (68, 68A, 68B, 68C, 68D) défini par une paroi intérieure allant doucement en s'amincissant depuis une entrée jusqu'à une sortie pour donner un rapport d'ondes stationnaires en tension en espace libre d'au moins 3/1 sur une bande de fréquences utile dudit premier amplificateur de signal.

11. Appareil de chauffage hyperfréquence à fréquence variable selon la revendication 10, comprenant de plus un applicateur de guide d'ondes incluant ledit guide d'ondes et une fenêtre diélectrique pour la protection dudit appareil de chauffage hyperfréquence à fréquence variable quand ladite cavité multimode est soumise à des pressions autres que la pression ambiante.

12. Appareil de chauffage hyperfréquence à fréquence variable selon la revendication 11, comprenant de plus un dispositif de refroidissement pour refroidir ladite fenêtre diélectrique.

13. Appareil de chauffage hyperfréquence à fréquence variable selon la revendication 11, comprenant de plus une transition cylindrique pour adapter une discontinuité d'impédance entre ledit guide d'ondes et ladite fenêtre diélectrique.

14. Appareil de chauffage hyperfréquence à fréquence variable selon la revendication 10, dans lequel ledit guide d'ondes est défini par une paroi intérieure allant en s'amincissant d'une façon étagée depuis une entrée jusqu'à une sortie pour donner un rapport d'ondes stationnaires en tension en espace libre d'au moins 3/1 sur une bande de fréquences utile dudit premier amplificateur de signal.

15. Appareil de chauffage hyperfréquence à fréquence variable selon la revendication 14, dans lequel ledit applicateur de guide d'ondes comprend de plus une fenêtre diélectrique pour la protection dudit appareil de chauffage hyperfréquence à fréquence variable quand ladite cavité multimode est soumise à des pressions autres que la pression ambiante.

16. Appareil de chauffage hyperfréquence à fréquence variable selon la revendication 15, comprenant de plus un dispositif de refroidissement pour refroidir ladite fenêtre diélectrique.

17. Appareil de chauffage hyperfréquence à fréquence variable selon la revendication 15, comprenant de plus une transition cylindrique pour adapter une discontinuité d'impédance entre ledit guide d'ondes et ladite fenêtre diélectrique.

18. Appareil de chauffage hyperfréquence à fréquence variable selon la revendication 1, comprenant de plus une porte (98) disposée contre une surface de ce dernier et un joint (100) pour empêcher une fuite desdits signaux hyperfréquences, ladite surface définissant une ouverture à travers laquelle lesdites matières sélectionnées sont placées à l'intérieur et retirées de ladite cavité multimode (34), ledit joint étant constitué d'au moins un joint choisi dans le groupe constitué de : un premier anneau (104) porté dans ladite cavité hyperfréquence proche de et s'étendant loin de ladite ouverture, un second anneau (102) porté par ladite porte et dimensionné pour être reçu à l'intérieur dudit premier anneau et un élément formant un joint compressible (106) porté entre ledit premier anneau et ledit second anneau de sorte qu'un joint est formé quand ledit anneau est reçu par ledit premier anneau ; au moins une garniture d'étanchéité portée par ladite porte et positionnée sur cette dernière pour mettre en prise ladite surface de ladite cavité multimode pour encercler ladite ouverture quand ladite porte est dans une position fermée ; et au moins un joint étant fabriqué à partir d'une matière polymère compressible absorbant les hyperfréquences et étant porté par ladite porte et positionné au-dessus de cette dernière pour mettre en prise ladite surface de cavité multimode pour encercler ladite ouverture quand ladite porte est dans une position fermée.

19. Appareil de chauffage hyperfréquence à fréquence variable selon la revendication 1, dans lequel ladite cavité multimode comprend de plus une fenêtre de travail (92) pour l'observation desdites matières sélectionnées pendant le traitement, ladite fenêtre de travail incorporant une protection contre les hyperfréquences (94) pour empêcher une fuite desdits signaux hyperfréquences.

20. Appareil de chauffage hyperfréquence à fréquence variable (10, 10') pour le traitement de matières sélectionnées, ledit appareil de chauffage hyperfréquence à fréquence variable comprenant un four hyperfréquence (32, 32', 32") qui définit une cavité multimode pour le traitement desdites matières sélectionnées, et ledit appareil de chauffage hyperfréquence à fréquence variable comprenant :

un générateur de signal hyperfréquence pour la production d'hyperfréquences par balayage par une largeur de bande utile sélectionnée définissant une fréquence centrale, chaque dite hyperfréquence définissant une forme d'onde, une fréquence, et une amplitude sélectionnées, ledit générateur de signal hyperfréquence étant un magnétron coaxial agile en fréquence (114) dudit magnétron dans lequel ladite largeur de bande utile est au moins égale à cinq pour cent de ladite fréquence centrale de ce dernier ; de sorte qu'une pluralité de modes hyperfréquences indépendants sont établis dans ladite cavité multimode de sorte qu'une densité d'énergie sensiblement uniforme prise en moyenne dans le temps est créée sur un volume de travail de ladite cavité multimode ;
une alimentation en énergie (22") pour amener de l'énergie audit générateur de signal hyperfréquence (114) ; et
un émetteur (24, 24', 24") pour transporter lesdites hyperfréquences produites par ledit générateur de signal hyperfréquence dans ladite cavité multimode.

21. Appareil de chauffage hyperfréquence à fréquence variable selon la revendication 20, dans lequel ladite alimentation en énergie est réglable, permettant de ce fait à ladite amplitude dudit signal produit par ledit générateur de signal hyperfréquence d'être modulée de manière sélective.

22. Appareil de chauffage hyperfréquence à fréquence variable selon la revendication 20, comprenant de plus une unité de commande de fréquence de signal pour commander une fréquence d'oscillation dudit magnétron coaxial.

23. Appareil de chauffage hyperfréquence à fréquence variable selon la revendication 20, dans lequel ledit guide d'ondes est défini par une paroi intérieure allant doucement en s'amincissant depuis une entrée jusqu'à une sortie pour donner un rapport d'ondes stationnaires en tension en espace libre d'au moins 3/1 sur une bande de fréquences utile dudit magnétron coaxial.

24. Appareil de chauffage hyperfréquence à fréquence variable selon la revendication 23, comprenant de plus un applicateur de guide d'ondes incluant ledit guide d'ondes et une fenêtre diélectrique pour la protection dudit appareil de chauffage hyperfréquence à fréquence variable quand ladite cavité multimode est soumise à des pressions autres que la pression ambiante.

25. Appareil de chauffage hyperfréquence à fréquence variable selon la revendication 24, comprenant un dispositif de refroidissement pour refroidir ladite fenêtre diélectrique.

26. Appareil de chauffage hyperfréquence à fréquence variable selon la revendication 24, comprenant de plus une transition cylindrique pour adapter une discontinuité d'impédance entre ledit guide d'ondes et ladite fenêtre diélectrique.

27. Appareil de chauffage hyperfréquence à fréquence variable selon la revendication 20, dans lequel ledit guide d'ondes est défini par une paroi intérieure allant en s'amincissant d'une façon étagée depuis une entrée jusqu'à une sortie pour donner un rapport d'ondes stationnaires en tension en espace libre d'au moins 3/1 sur une bande de fréquences utile dudit magnétron coaxial.

28. Appareil de chauffage hyperfréquence à fréquence variable selon la revendication 27, comprenant de plus un applicateur de guide d'ondes incluant ledit guide d'ondes et une fenêtre diélectrique pour la protection dudit appareil de chauffage hyperfréquence à fréquence variable quand ladite cavité multimode est soumise à des pressions autres que la pression ambiante.

**29.** Appareil de chauffage hyperfréquence à fréquence variable selon la revendication 27, comprenant de plus un dispositif de refroidissement pour refroidir ladite fenêtre diélectrique.

**30.** Appareil de chauffage hyperfréquence à fréquence variable selon la revendication 27, comprenant de plus une transition cylindrique pour adapter une discontinuité d'impédance entre ledit guide d'ondes et ladite fenêtre diélectrique.

**31.** Appareil de chauffage hyperfréquence à fréquence variable selon la revendication 20, comprenant de plus une porte (98) disposée contre une surface de ce dernier et un joint (100) pour empêcher une fuite desdits signaux hyperfréquences, ladite surface définissant une ouverture à travers laquelle lesdites matières sélectionnées sont placées à l'intérieur et retirées de ladite cavité multimode (34), ledit joint étant constitué d'au moins un joint choisi dans le groupe constitué de : un premier anneau (104) porté dans ladite cavité hyperfréquence proche de et s'étendant loin de ladite ouverture, un second anneau (102) porté par ladite porte et dimensionné pour être reçu à l'intérieur dudit premier anneau et un élément formant un joint compressible (106) porté entre ledit premier anneau et ledit second anneau de sorte qu'un joint est formé quand ledit anneau est reçu par ledit premier anneau ; au moins une garniture d'étanchéité portée par ladite porte et positionnée sur cette dernière pour mettre en prise ladite surface de ladite cavité multimode pour encercler ladite ouverture quand ladite porte est dans une position fermée ; et au moins un joint étant fabriqué à partir d'une matière polymère compressible absorbant les hyperfréquences et étant porté par ladite porte et positionné au-dessus de cette dernière pour mettre en prise ladite surface de ladite cavité multimode pour encercler ladite ouverture quand ladite porte est dans une position fermée.

**32.** Appareil de chauffage hyperfréquence à fréquence variable selon la revendication 20, dans lequel ladite cavité multimode comprend de plus une fenêtre de travail (92) pour l'observation desdites matières sélectionnées pendant le traitement, ladite fenêtre de travail incorporant une protection contre les hyperfréquences (94) pour empêcher une fuite desdits signaux hyperfréquences.

Fig. 1

EP 0 801 879 B1

Fig. 2

Fig. 3

Fig. 4

Fig. 5

Fig.6

EP 0 801 879 B1

Fig.7

Fig.9

Fig.8

Fig.10

Fig.11

68C    78

76A

13    70    72    13

74

76A

Fig.12

72

76A

68C

78

70    76A    74

Fig.13

68D

76A

15

15

86

80

76A

72

74

Fig.14

72

76A

68D

90

82

78

78

86

76A

88

80

90

Fig.15

Fig.16

EP 0 801 879 B1

Fig.17A

Fig.17

Fig.18

EP 0 801 879 B1

Fig.19

$f_C = 5$ GHz
BW= 5 %

Fig.20A

$f_C = 5$ GHz
BW= 10 %

Fig.20B

$f_C = 5$ GHz
BW= 20 %

Fig.20C

$f_C = 5$ GHz
BW= 40 %

Fig.20D

$f_C = 15\,\text{GHz}$
$BW = 1.3\,\%$

Fig.21A

$f_C = 15\,\text{GHz}$
$BW = 2.5\,\%$

Fig.21B

$f_C = 15$ GHz
BW= 5 %

Fig.21C

$f_C = 15$ GHz
BW= 10 %

Fig.21D

$f_c$ = 15 GHz
BW= 20 %

Fig.21E

$f_c$ = 15 GHz
BW= 40 %

Fig.21F